# NEUE EUROPÄISCHE PATENTSCHRIFT

(11) **EP 3 749 558 B2**
(45) Veröffentlichungstag und Bekanntmachung des Hinweises auf die Entscheidung über den Einspruch: **14.10.2026**
(45) Hinweis auf die Patenterteilung: 07.06.2023
(21) Anmeldenummer: 19701644.7
(22) Anmeldetag: 24.01.2019
(51) Int. Cl.: B60T 13/26

(54) **BREMSANLAGE FÜR EIN NUTZFAHRZEUG UND VERWENDUNG EINER DRUCKLUFTAUFBEREITUNGSEINHEIT**
BRAKING SYSTEM FOR A UTILITY VEHICLE AND USE OF A COMPRESSED AIR PROCESSING UNIT
SYSTÈME DE FREINAGE POUR UN VÉHICULE UTILITAIRE ET UTILISATION D'UNE UNITÉ DE MISE À DISPOSITION D'AIR COMPRIMÉ

(30) Priorität: 07.02.2018 DE 102018102764
(43) Veröffentlichungstag der Anmeldung: 16.12.2020
(73) Patentinhaber: Haldex Aktiebolag, 261 24 Landskrona (SE)
(72) Erfinder: HEER, Siegfried, 69168 Wiesloch (DE)
(74) Vertreter: Müller Schupfner & Partner Patent- und Rechtsanwaltspartnerschaft mbB (Muc)
(86) Internationale Anmeldenummer: PCT/EP2019/051701
(87) Internationale Veröffentlichungsnummer: WO 2019/154628

(56) Entgegenhaltungen:
- EP-A1- 1 122 142
- EP-A1- 2 754 594
- EP-A2- 1 069 016
- WO-A2-2004/098967
- WO-A2-2007/037818
- DE-A1- 102015 117 284
- DE-A1- 102017 001 425

## Beschreibung

### TECHNISCHES GEBIET DER ERFINDUNG

Die Erfindung betrifft eine Bremsanlage für ein Nutzfahrzeug. Bei dieser Bremsanlage erfolgt eine elektronische Steuerung, Regelung oder Beeinflussung von zwei Bremsdrücken für zwei Betriebsbremszylinder oder zwei Gruppen von Betriebszylindern, welche insbesondere unterschiedlichen Fahrzeugachsen oder Kreisen von Betriebsbremszylindern zugeordnet sind, durch zwei Bremssteuermodule, die jeweils einem Betriebsbremszylinder oder einer Gruppe von Betriebsbremszylindern zugeordnet sind (wobei aber auch mehr als zwei Bremssteuermodule mit zugeordneten weiteren Betriebsbremszylindern oder Gruppen von Betriebsbremszylindern vorhanden sein können). Des Weiteren betrifft die Erfindung eine Druckluftaufbereitungseinheit für ein Nutzfahrzeug. Schließlich betrifft die Erfindung eine neue Verwendung einer Druckluftaufbereitungseinheit.

### STAND DER TECHNIK

WO 2017/060128 A1 offenbart eine Bremsanlage, bei der ein Bremsdruck für Betriebsbremszylinder einer Hinterachse (unter optionaler Zwischenschaltung von elektronisch geregelten ABS-Druckregelventilen) durch ein 1-Kanal-Druckregelmodul erzeugt wird. Ein Vorratsanschluss des 1-Kanal-Druckregelmoduls wird aus einem Vorratsbehälter mit Druckluft versorgt, der zusätzlich auch der Druckluftversorgung eines Fußbremsmoduls dient. Das 1-Kanal-Druckregelmodul besitzt einen pneumatischen Steueranschluss, dem der pneumatische Bremsdruck zugeführt wird, der von dem Fußbremsmodul infolge der Betätigung eines Bremspedals durch den Fahrer ausgesteuert wird. Das 1-Kanal-Druckregelmodul verfügt über ein Relaisventil mit einem über einen Relaiskolben betätigten Ein-/Auslassventil, welches den den Betriebsbremszylindern zugeführten Bremsdruck in Abhängigkeit von dem auf den Relaiskolben wirkenden Steuerdruck erzeugt. Bei vorhandener elektrischer Leistungsversorgung und intakter Steuereinheit des 1-Kanal-Druckregelmoduls erfolgt die Vorgabe des Steuerdrucks des Relaisventils über zwei von der Steuereinheit angesteuerte Magnetventile. Die Magnetventile sind als Sperrventile ausgebildet und nehmen ohne Bestromung ihre Sperrstellung ein. Zur Druckerhöhung des Steuerdrucks an dem Steueranschluss des Relaisventils verbindet ein Magnetventil den Steueranschluss mit dem Vorratsanschluss, während für eine Verringerung des Steuerdrucks an dem Steueranschluss des Relaisventils das andere Magnetventil den Steueranschluss des Relaisventils mit einer Entlüftung verbindet. Für die Regelung der Magnetventile, des Steuerdrucks des Relaisventils und somit des ausgesteuerten Bremsdruckes für die Betriebsbremszylinder durch die Steuereinheit wird der Steuereinheit über einen elektrischen Steueranschluss des 1-Kanal-Druckregelmoduls ein der Betätigung des Bremspedals entsprechendes elektrisches Steuersignal des Fußbremsmoduls zugeführt. Bei einem Ausfall der elektrischen Leistungsversorgung oder einer mangelnden Funktion der Steuereinheit nehmen die Magnetventile ihre Sperrstellung ein, so dass der Steueranschluss des Relaisventils sowohl gegenüber dem Vorratsbehälter als auch gegenüber der Entlüftung abgesperrt ist. In diesem Fall nimmt aber ein Backup-Magnetventil, welches ebenfalls als Sperrventil ausgebildet ist, eine Durchlassstellung ein, was zur Folge hat, dass der mit dem Fußbremsmodul verbundene pneumatische Steueranschluss des 1-Kanal-Druckregelmoduls mit dem Steueranschluss des Relaisventils verbunden ist. In diesem Backup-Betriebszustand erfolgt die Steuerung des Relaisventils und damit die Vorgabe des Drucks für die Betriebsbremszylinder über die Betätigung des Bremspedals des Fußbremsmoduls durch den Fahrer und den dadurch durch das Fußbremsmodul erzeugten pneumatischen Steuerdruck. Die aus WO 2017/060128 A1 bekannte Bremsanlage verfügt auch über ein 1-Kanal-Druckregelmodul für die Erzeugung eines Bremsdruckes für Betriebsbremszylinder einer Vorderachse. Das 1-Kanal-Druckregelmodul für die Vorderachse ist grundsätzlich entsprechend dem zuvor erläuterten 1-Kanal-Druckregelmodul für die Hinterachse ausgebildet. Allerdings erfolgt die Druckluftversorgung eines Vorratsanschlusses des 1-Kanal-Druckregelmoduls der Vorderachse parallel über einen ersten Leitungszweig, der ein Rückschlagventil und einen Vorratsbehälter aufweist, sowie einen zweiten Leitungszweig, der ein Rückschlagventil und einen weiteren Vorratsbehälter aufweist und der auch für die Druckluftversorgung eines Nebenverbraucherkreises (hier ein Luftfederungskreis) zuständig ist. Die beiden 1-Kanal-Druckregelmodule für die Vorderachse sowie die Hinterachse bilden zusammen eine Baueinheit, nämlich ein 2-Kanal-Druckregelmodul. Über die beiden separaten Steuereinheiten der beiden 1-Kanal-Druckregelmodule kann mittels der Regelung der Magnetventile und damit mittels der Regelung des Steuerdrucks für die Relaisventile eine Regelung unterschiedlicher Bremsdrücke für die Betriebsbremszylinder einerseits der Vorderachse und andererseits der Hinterachse entsprechend einer gewünschten Achslastverteilung erfolgen. Um eine Regelung zu ermöglichen, kann der von den Relaisventilen ausgesteuerte Bremsdruck über in die 1-Kanal-Druckregelmodule integrierte Drucksensoren erfasst und von den Steuereinheiten verarbeitet werden.

WO 01/08953 A1 offenbart eine Bremsanlage eines Nutzfahrzeugs, bei welcher Betriebsbremszylinder einer Hinterachse des Nutzfahrzeugs über ein elektronisch geregeltes 2-Kanal-Druckregelmodul angesteuert werden. Das 2-Kanal-Druckregelmodul wird aus einem Vorratsbehälter, welcher lediglich für die Druckluftversorgung der Betriebsbremszylinder der Hinterachse zuständig ist, mit Druckluft versorgt. Die Betriebsbremszylinder einer Vorderachse des Nutzfahrzeugs werden jeweils über zugeordnete 1-Kanal-Druckregelmodule mit Druckluft versorgt. Ein einer Fahrzeugseite der Vorderachse zugeordnetes 1-Kanal-Druckregelmodul verfügt über einen mit einem Vorratsbehälter für die Vorderachse verbundenen Vorratsanschluss. Das 1-Kanal-Druckregelmodul verfügt auch über einen Steueranschluss, welchem der von dem Fahrer über ein Bremspedal ausgesteuerte pneumatische Bremsdruck zugeführt wird. Für den Fall eines Versagens der elektropneumatischen Aussteuerung eines Bremsdrucks leitet das 1-Kanal-Druckregelmodul den dem Steueranschluss zugeführten pneumatischen Bremsdruck an die Betriebsbremszylinder weiter. Das 1-Kanal-Druckregelmodul der anderen Fahrzeugseite der Vorderachse verfügt ebenfalls über einen Vorratsanschluss und einen Steueranschluss mit entsprechender Verbindung des Ausgangs des 1-Kanal-Druckregelmoduls mit dem zugeordneten Betriebsbremszylinder. Allerdings ist für dieses 1-Kanal-Druckregelmodul der Vorratsanschluss über ein Wechselventil einerseits mit dem Vorratsbehälter der Vorderachse verbunden und andererseits mit einem Hilfs-Vorratsbehälter verbunden. Hierbei ist der mit dem Vorratsbehälter der Vorderachse verbundene Anschluss des Wechselventils durch das Wechselventil derart priorisiert, dass ohne Einbruch des Drucks in dem Vorratsbehälter der Vorderachse infolge einer Leckage der Vorratsanschluss des 1-Kanal-Druckregelmoduls mit dem Vorratsbehälter der Vorderachse verbunden ist. Erst im Fall einer Leckage verbindet das Wechselventil das 1-Kanal-Druckregelmodul mit dem Hilfs-Vorratsbehälter. Für dieses 1-Kanal-Druckregelmodul ist des Weiteren der Steueranschluss über ein Relaisventil mit dem Hilfs-Vorratsbehälter verbunden. Das Relaisventil verfügt dabei über eine erste Wirkfläche, welche mit dem von dem Bremspedal vom Fahrer ausgesteuerten pneumatischen Bremsdruck beaufschlagt ist, sowie über eine entgegengesetzt wirkende Wirkfläche, die mit einem von einem Anhängersteuerventil ausgesteuerten pneumatischen Bremsdruck beaufschlagt ist.

WO 2010/094481 A2 offenbart ein 2-Kanal-Druckregelmodul, über welches die Beaufschlagung der Betriebsbremsen sowohl der Vorderachse als auch der Hinterachse eines Nutzfahrzeugs erfolgt. Das 2-Kanal-Druckregelmodul verfügt jeweils für die Vorderachse und die Hinterachse über einen Vorratsanschluss, der mit einem zugeordneten Vorratsbehälter verbunden ist, sowie über einen Steueranschluss, welchem der von dem Fahrer über das Bremspedal vorgegebene pneumatische Bremsdruck zugeführt wird.

### AUFGABE DER ERFINDUNG

Weiterer Stand der Technik ist aus WO 2008/025404 A1, WO 2004/098967 A2, WO 2007/037818 A2, EP 1 122 142 A1 EP 1 069 016 A2 und EP 1 069 017 A2 bekannt.

Der vorliegenden Erfindung liegt die Aufgabe zugrunde, eine elektropneumatische Bremsanlage vorzuschlagen, welche bei einer Beachtung des Bauaufwandes eine erhöhte Betriebssicherheit und/oder Verfügbarkeit des Fahrzeug im Fall einer pneumatischen Leckage aufweist. Des Weiteren liegt der vorliegenden Erfindung die Aufgabe zugrunde, eine entsprechend verbesserte Druckluftaufbereitungseinheit sowie eine neue Verwendung einer Druckluftaufbereitungseinheit vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung betrifft eine elektropneumatische Bremsanlage, bei welcher mindestens eine elektronische Steuereinheit auf Grundlage mindestens eines elektrischen Steuersignals mittels elektrisch betätigter Ventile einen Bremsdruck für einen Betriebsbremszylinder erzeugt oder beeinflusst. Hierbei kann der Bremsdruck gesteuert oder geregelt (im Folgenden auch vereinfacht nur als "steuern" bezeichnet) werden. Die erzeugte Höhe und/oder der Verlauf des Bremsdrucks kann bspw.
- einen von dem Fahrer vorgegebenen Bremswunsch, insbesondere auf Grundlage einer Betätigung des Bremspedals durch den Fahrer mit der unmittelbaren Erzeugung eines elektrischen Bremssignals, und/oder
- ein automatisch von einer Steuereinheit auf Grundlage von Betriebsgrößen erzeugtes Bremssignal, insbesondere auf Grundlage eines Kollisionsvermeidungssystems, eines Tempomats und/oder eines Schlupfvermeidungssystems wie einer ABS- oder EBS-Regelung,
berücksichtigen oder mit dem Bremswunsch und/oder dem Bremssignal korrelieren oder diesem entsprechen.

Im Rahmen der Erfindung finden Bremssteuermodule Einsatz. Die Bremssteuermodule sind insbesondere elektronische Bremssteuermodule mit einer elektronischen Steuereinheit, einem Eingangsanschluss, über welchen dem Bremssteuermodul Druckluft zur Verfügung gestellt wird, und mindestens einem von der Steuereinheit gesteuerten Magnetventil, mittels dessen auf Grundlage der Steuerung durch die Steuereinheit die an dem Eingangsanschluss anstehende Druckluft umgewandelt wird in einen Bremsdruck für einen Betriebsbremszylinder. Möglich ist hierbei, dass die Steuereinheit die Steuersignale zur Erzeugung eines Bremsdruckes aus dem Bremssteuermodul zur Verfügung gestellten Betriebsgrößen ermittelt und/oder die Steuereinheit des Bremssteuermoduls mit einer anderen Steuereinheit, insbesondere einer zentralen Bremssteuereinheit, über ein drahtgebundenes oder drahtloses Netzwerk, ein Bussystem oder eine Signal- oder Datenleitungen in Verbindung steht und eine Vorgabe oder eine Einflussgröße für den zu erzeugenden Bremsdruck empfängt.

In der erfindungsgemäßen elektropneumatischen Bremsanlage ist ein erstes Bremssteuermodul vorhanden. Mittels des ersten Bremssteuermodul erfolgt eine Erzeugung, insbesondere Aussteuerung, eines Bremsdruckes. Dieser Bremsdruck kann bspw. für ausschließlich einen Betriebsbremszylinder eines Fahrzeugrades oder auch Betriebsbremszylinder unterschiedlicher Fahrzeugräder oder für Betriebsbremszylinder einer Fahrzeugachse oder Betriebsbremszylinder mehrerer eine Gruppe bildender Fahrzeugachsen bestimmt sein.

Des Weiteren verfügt die erfindungsgemäße elektropneumatische Bremsanlage über ein zweites Bremssteuermodul, mittels dessen ebenfalls eine Erzeugung eines Bremsdruckes erfolgt, der dann für (mindestens) einen Betriebsbremszylinder eines (anderen) Fahrzeugrades oder für Betriebsbremszylinder (mindestens) einer (anderen) Fahrzeugachse bestimmt ist. Hierbei können die von den beiden Bremssteuermodulen erzeugten Bremsdrücke temporär oder permanent gleich sein oder voneinander abweichen, bspw. je nach statischer oder dynamischer Rad- oder Achslastverteilung und/oder einem etwaigen auftretenden Schlupf.

Die erfindungsgemäßen Bremssteuermodule können jeweils als eine Baueinheit ausgebildet sein oder mit weiteren, anderen Funktionen dienenden Bauelementen zu einer Baueinheit vereinigt sein. Möglich ist auch, dass die beiden Bremssteuermodule zu einer Baueinheit zusammengefasst sind. Vorzugsweise sind die Bremssteuermodule im Bereich eines Fahrzeugrades, einer Fahrzeugradaufhängung, einer Fahrzeugachse oder Fahrzeugachsenaufhängung angeordnet und an dem Fahrzeugchassis, der Fahrzeugachse oder einem Achskörper, der Fahrzeugradaufhängung oder der Fahrzeugachsenaufhängung montiert. Pneumatisch und elektrisch kommunizieren die Bremssteuermodule bspw. über starre oder flexible Leitungen oder drahtlos mit weiteren unmittelbar oder mittelbar an dem Fahrzeugchassis abgestützten Bauelementen, während die pneumatischen Ausgänge der Bremssteuermodule vorzugsweise über flexible Leitungen oder Schläuche mit den Betriebsbremszylindern verbunden sind.

In der erfindungsgemäßen elektropneumatischen Bremsanlage wird ein Bremssteuermodul in redundanter Weise mit Druckluft versorgt, indem dieses Bremssteuermodul, insbesondere ein Eingangsanschluss desselben, sowohl mit einem Druckluftreservoir als auch mit einem Backup-Druckluftreservoir verbunden ist. Im Rahmen der Erfindung wird unter einer derartigen Verbindung des Bremssteuermoduls mit dem Druckluftreservoir bzw. dem Backup-Druckluftreservoir nicht nur eine permanente pneumatische Leitungsverbindung verstanden, sondern jedwede Verbindung, die zumindest in ausgewählten Betriebssituationen den Übertritt von Druckluft von dem Druckluftreservoir bzw. dem Backup-Druckluftreservoir zu dem Bremssteuermodul, insbesondere dem Eingangsanschluss desselben, ermöglicht. Dies umfasst Ausführungsformen, bei welchen für einen Normalbetrieb lediglich eine Verbindung zwischen dem Druckluftreservoir und dem Bremssteuermodul besteht, während die Verbindung zwischen dem Backup-Druckluftreservoir und dem Bremssteuermodul abgesperrt ist, während dann lediglich im Backup-Fall (insbesondere für den Fall einer Leckage des Druckluftreservoirs, einer stromaufwärts des Druckluftreservoirs angeordneten Leitung oder eines dort angeordneten pneumatischen Bauelements oder Leitung oder pneumatischen Bauelementen oder Leitungen auf dem Weg der Druckluft von dem Druckluftreservoir zu dem Bremssteuermodul) die Verbindung zwischen dem Backup-Druckluftreservoir und dem Bremssteuermodul geöffnet wird, während in diesem Fall die Verbindung zwischen dem Druckluftreservoir und dem Bremssteuermodul abgesperrt wird. Möglich ist aber auch, dass, zumindest temporär und/oder in ausgewählten Betriebssituationen, sowohl die Verbindung des Druckluftreservoirs mit dem Bremssteuermodul als auch die Verbindung des Backup-Druckluftreservoirs mit dem Bremssteuermodul geöffnet ist oder abgesperrt ist. Möglich ist des Weiteren, dass die Druckluft des Druckluftreservoirs bzw. des Backup-Druckluftreservoirs unbeeinflusst an dem Eingangsanschluss des Bremssteuermoduls ansteht. Die Erfindung umfasst aber auch Ausführungsformen, bei welchen der an dem Eingangsanschluss des Bremssteuermoduls anstehende Druck bereits beeinflusst worden ist, indem beispielsweise eine elektronische Steuerung von Ventilen auf dem Weg von dem Druckluftreservoir bzw. dem Backup-Druckluftreservoir zu dem Bremssteuermodul erfolgt, um beispielsweise bereits an dem Eingangsanschluss des Bremssteuermoduls einen mit einem Bremswunsch oder einem Bremssignal korrelierenden Bremsdruck zu erzeugen, welcher dann (insbesondere mit einer Modulation oder einer Anti-Schlupf-Regelung) durch das Bremssteuermodul modifiziert werden soll. Schließlich umfasst die Erfindung auch Ausführungsformen, bei welchen in der Leitungsverbindung zwischen dem Druckluftreservoir bzw. dem Backup-Druckluftreservoir und dem Bremssteuermodul passive Bauelemente wie Drucksicherungsventile, Überströmventile u. ä. angeordnet sind.

Die vorliegende Erfindung basiert auf der Erkenntnis, dass für bekannte elektropneumatische Bremsanlagen eines Nutzfahrzeuges der Fachmann dem Vorurteil gefolgt ist, dass es für die Gewährleistung der Betriebssicherheit der Bremsanlage ausreichend ist, dass bei einer Leckage in der Bremsanlage gewährleistet ist, dass zumindest noch ein Teil der Betriebsbremsen des Nutzfahrzeugs (für eine begrenzte Zahl von Bremsungen) betriebsfähig bleibt, so dass der Fahrer mit dem verbleibenden Teil der zur Verfügung stehenden Betriebsbremsen das Fahrzeug trotz der Leckage abbremsen kann. Für die eingangs angeführten Bremsanlagen hat diese Herangehensweise des Fachmannes die Folge, dass in dem Nutzfahrzeug ein Bremssteuermodul redundant sowohl von einem Druckluftreservoir als auch von einem Backup-Druckluftreservoir mit Druckluft versorgt wird, so dass bei einer Leckage der von dem Druckluftreservoir zugeführten Druckluft dennoch die Druckluftversorgung und damit die Betriebsfähigkeit des Bremssteuermoduls und der dem Bremssteuermodul zugeordneten Betriebsbremszylinder durch das Backup-Druckluftreservoir gewährleistet bleibt. Die Erfindung schlägt erstmals vor, dass nicht nur ein Bremssteuermodul in redundanter Weise mittels eines Backup-Druckluftreservoirs versorgt wird, sondern dass dies zumindest für zwei Bremssteuermodule gilt.

Darüber hinaus setzt die Erfindung nicht separate Backup-Druckluftreservoirs für die beiden Bremssteuermodule ein, um deren Betriebsfähigkeit auch im Fall einer Leckage zu gewährleisten. Vielmehr ist ein Backup-Druckluftreservoir multifunktional genutzt, indem dieses sowohl mit dem ersten Bremssteuermodul als auch mit dem zweiten Bremssteuermodul verbunden ist. Hierdurch ergibt sich eine signifikante Reduzierung des Bauaufwandes, da nicht mehrere Backup-Druckluftreservoirs eingesetzt werden müssen. Ohne dass dieses zwingend der Fall ist, ist im Rahmen der Erfindung sogar auch möglich, dass ein einziges Backup-Druckluftreservoir für mehr als zwei Bremssteuermodule für eine Backup-Druckluftversorgung zuständig ist.

Um lediglich einige von der Erfindung umfasste Beispiele zu nennen, können das erste Bremssteuermodul und das zweite Bremssteuermodul (und u. U. auch weitere Bremssteuermodule) jeweils einem Betriebsbremszylinder eines Fahrzeugrades oder mehreren Betriebsbremszylindern von Fahrzeugrädern oder jeweils Betriebsbremszylindern einer Fahrzeugachse oder Betriebsbremszylindern mehrerer Fahrzeugachsen zugeordnet sein. Möglich ist aber auch, dass mittels des Backup-Druckluftreservoirs die Druckluftversorgung eines ersten Bremssteuermoduls erfolgt, welches den Betriebsbremszylindern einer Fahrzeugachse zugeordnet ist, während mittels des Backup-Druckluftreservoirs auch eine Druckluftversorgung eines zweiten Bremssteuermoduls und eines dritten Bremssteuermoduls erfolgt, die jeweils Betriebsbremszylindern eines Fahrzeugrads zugeordnet sein können. Insbesondere handelt es sich in dem letztgenannten Fall bei dem ersten Bremssteuermodul um ein einer mittleren oder hinteren Fahrzeugachse zugeordnetes Bremssteuermodul, während das zweite Bremssteuermodul sowie das dritte Bremssteuermodul einer Vorderachse des Nutzfahrzeugs zugeordnet sind.

Das erfindungsgemäße Druckluftreservoir bzw. Backup-Druckluftreservoir ist insbesondere ein Behältnis zur Speicherung von zuvor von einem Kompressor des Nutzfahrzeugs bereitgestellter Druckluft. Vorzugsweise handelt es sich bei dem Druckluftreservoir um einen Druckluftbehälter mit einem vorgegebenen Volumen, in welchem von einer Druckluftaufbereitung über Kreisschutzventile bereitgestellte Druckluft in einem vorgegebenen Druckbereich bevorratet wird. Möglich ist aber auch, dass insbesondere das Backup-Druckluftreservoir von einem Leitungsvolumen oder einem Volumen eines pneumatischen Bauelements (wie beispielsweise Luftfederbälgen) bereitgestellt wird. Des Weiteren umfasst die Erfindung auch Ausführungsformen, in welchen in einem Backup-Fall nicht ausschließlich Druckluft aus dem Backup-Druckluftreservoir verwendet wird, welche bereits zuvor von dem Kompressor bereitgestellt werden ist, sondern in dem Backup-Fall eine Nachförderung von Druckluft in das Backup-Druckluftreservoir erfolgt.

Für eine Weiterbildung der erfindungsgemäßen Bremsanlage ist zwischen einem Druckluftreservoir und dem zugeordneten Bremssteuermodul ein Sicherungsventil zwischengeordnet. Das Sicherungsventil sperrt bei einem Druckabfall in dem Druckluftreservoir (also in einem Backup-Fall; für den Druckabfall kann eine Leckage in dem Druckluftreservoir selber oder in den mit diesen verbundenen Leitungen oder pneumatischen Bauelementen verantwortlich sein) eine Strömung von Druckluft von dem Bremssteuermodul zu dem Druckluftreservoir ab, womit vermieden werden kann, dass eine Entlüftung des Bremssteuermoduls über die Leckage erfolgt. Im einfachsten Fall ist dem Eingangsanschluss des Bremssteuermoduls ein Rückschlagventil vorgeordnet oder die Verbindung des Bremssteuermoduls und des Druckluftreservoirs erfolgt über ein Wechselventil. Als Sicherungsventil kann aber neben einem Rückschlagventil oder einem Wechselventil ein beliebiges Ventil Einsatz finden, beispielsweise ein Umschaltventil, welches für den Backup-Fall eine Umschaltung der Druckluftversorgung von dem Druckluftreservoir zu dem Backup-Druckluftreservoir und/oder die gewünschte Absperrung des defekten Betriebsbremskreises vornimmt. Im Rahmen der Erfindung kann das Sicherungsventil stromaufwärts des Bremssteuermoduls, also zwischen dem Bremssteuermodul und dem Druckluftreservoir, angeordnet sein. Möglich ist im Rahmen der Erfindung aber auch, dass das Sicherungsventil in das Bremssteuermodul integriert ist.

Für die redundante Druckluftversorgung der Bremssteuermodule durch das Druckluftreservoir einerseits und das Backup-Druckluftreservoir andererseits ist erforderlich, dass eine Eingangsleitung des Bremssteuermoduls sowohl mit dem Druckluftreservoir als auch mit dem Backup-Druckluftreservoir verbunden ist. Möglich ist, dass somit die beiden Versorgungsleitungen von dem Druckluftreservoir und dem Backup-Druckluftreservoir außerhalb des Bremssteuermoduls über geeignete pneumatische Verbindungseinheiten wie ein Umschaltventil oder ein anderweitiges Ventil zusammengeführt sind zu einer gemeinsamen Eingangsleitung, die dann mit einem einzigen Eingangsanschluss des Bremssteuermoduls verbunden ist. Für einen besonderen Vorschlag der Erfindung weisen aber die Bremssteuermodule jeweils einen ersten Eingangsanschluss und einen zweiten Eingangsanschluss auf. Der erste Eingangsanschluss und der zweite Eingangsanschluss münden dann innerhalb des Bremssteuermoduls (unter Einsatz einer geeigneten pneumatischen Zusammenführungseinheit wie eines Umschaltventils oder Wechselventils oder eines Knotenpunktes, u. U. mit vorgeordneten Rückschlagventilen) in eine gemeinsame Eingangsleitung des zugeordneten Bremssteuermoduls. Die ersten Eingangsanschlüsse der beiden Bremssteuermodule sind dann jeweils mit einem zugeordneten Druckluftreservoir verbunden. Hingegen sind die zweiten Eingangsanschlüsse der beiden Bremssteuermodule dann mit dem Backup-Druckluftreservoir verbunden.

Beispielsweise können die Druckluftreservoirs, welche im Normalbetrieb für die Druckluftversorgung der Bremssteuermodule verantwortlich sind, an die ersten Eingangsanschlüsse der beiden Bremssteuermodule angeschlossen werden, während für die Backup-Druckluftversorgung beider Bremssteuermodule ein zusätzliches Backup-Druckluftreservoir vorhanden ist. Um ein zusätzliche Backup- Druckluftreservoir zu vermeiden, ist es jedoch erfindungsgemäß, dass die Druckluftreservoirs, welche jeweils für die Druckluftversorgung der Bremssteuermodule außerhalb des Backup-Falls zuständig sind, jeweils als Backup-Druckluftreservoirs für das andere Bremssteuermodul eingesetzt sind. Für diese Ausgestaltung sind somit die beiden Druckluftreservoirs jeweils mit einem ersten Eingangsanschluss eines zugeordneten Bremssteuermoduls sowie einem zweiten Eingangsanschluss des anderen Bremssteuermoduls verbunden.

In weiterer Ausgestaltung der Erfindung weist die Bremsanlage eine Druckluftaufbereitungseinheit auf. Die Druckluftaufbereitungseinheit weist einen Druckregler, einen Lufttrockner und mindestens ein Kreisschutzventil auf, wobei die Druckluftaufbereitungseinheit insbesondere gemäß den gesetzlichen Anforderungen ausgebildet ist, der Druckluftversorgung mehrerer Verbraucherkreise über mehrere Kreisschutzventile dient und gemäß dem vielfältigen Stand der Technik zu derartigen Druckluftaufbereitungseinheiten ausgebildet sein kann. Mittels der Druckluftaufbereitungseinheit erfolgt die Versorgung mindestens eines Druckluftreservoirs sowie des Backup-Druckluftreservoirs mit Druckluft.

Im Rahmen der Erfindung erfolgt, wie auch eingangs erläutert, eine Aussteuerung eines Bremsdrucks für mindestens einen Betriebsbremszylinder, wobei dies unter Steuerung eines in der Eingangsleitung anstehenden Versorgungsdrucks oder unter Anpassung eines in der Eingangsleitung anstehenden Bremsdrucks entsprechend einem Bremswunsch oder einem Bremssignal erfolgt. Für eine konstruktive Ausgestaltung mindestens eines Bremssteuermoduls ist in diesem die Eingangsleitung über ein Magnetventil, insbesondere ein 2/2-Wegeventil, mit einem Ausgangsanschluss des Bremssteuermoduls verbunden, an welchem mindestens ein Betriebsbremszylinder angeschlossen ist. Wird dieses Magnetventil mittels der Steuereinheit des Bremssteuermoduls in eine Öffnungsstellung überführt, kommt es zu einer Weitergabe des Drucks der Eingangsleitung zu dem Ausgangsanschluss, so dass eine Druckerhöhung an dem Ausgangsanschluss ausgesteuert werden kann. Des Weiteren verfügt das Bremssteuermodul über ein von der Steuereinheit angesteuertes Magnetventil, bei welchem es sich insbesondere ebenfalls um ein 2/2-Wegeventil oder Sperrventil handelt. Über dieses weitere Magnetventil ist der Ausgangsanschluss mit einer Entlüftung oder einem Entlüftungsanschluss verbunden. Wird dieses Magnetventil in eine Öffnungsstellung überführt, kann eine Entlüftung des Ausgangsanschlusses erfolgen, was zu einer Reduzierung des Bremsdrucks in dem Betriebsbremszylinder führt. Je nach Betriebsstellung der beiden Magnetventile kann somit eine Erhöhung, Verringerung oder ein Halten des Bremsdrucks an dem Ausgangsanschluss erfolgen, womit eine Steuerung (also auch eine Regelung) des Bremsdrucks in dem Betriebsbremszylinder ermöglicht ist.

Für eine alternative Ausgestaltung ist in dem Bremssteuermodul die Eingangsleitung über eine Kombination eines 3/2-Wege-Magnetventils und eines 2/2-Wege-Magnetventils (in beliebiger Reihenfolge der Magnetventile in Reihenschaltung) mit einem Ausgangsanschluss für mindestens einen Betriebsbremszylinder verbunden. Wird das 2/2-Wege-Magnetventil in eine Sperrstellung überführt, kann der Ausgangsanschluss abgesperrt werden. Wird hingegen das 2/2-Wege-Magnetventil in seine Öffnungsstellung überführt, kann das 3/2-Wege-Magnetventil in einer Durchlassstellung die Eingangsleitung mit dem Ausgangsanschluss verbinden, womit eine Druckbeaufschlagung der Betriebsbremszylinder möglich ist, sowie in einer Entlüftungsstellung eine Verbindung des Ausgangsanschlusses mit einer Entlüftung oder einem Entlüftungsanschluss schaffen.

Für die beiden vorgenannten Alternativen dienen die genannten Magnetventile der direkten Be- und Entlüftung des Ausgangsanschlusses. Für eine weitere von der Erfindung umfasste Alternative wirken die vorgenannten alternativen Kombinationen von zwei Magnetventilen (Parallelschaltung von 2/2-Wege-Magnetventilen oder Reihenschaltung eines 3/2-Wege-Magnetventils und eines 2/2-Wege-Magnetventils) auf einen Steueranschluss eines Relaisventils, welches in dem Bremssteuermodul angeordnet ist und die Eingangsleitung mit einem Ausgangsanschluss für mindestens einen Betriebsbremszylinder verbindet. In diesem Fall dienen die Magnetventile der Vorsteuerung der Be- und Entlüftung durch das Relaisventil mit der hierdurch bedingten bekannten Luftmengenverstärkung und -steuerung.

Für eine erfindungsgemäße Bremsanlage bildet das dem ersten Bremssteuermodul zugeordnete Druckluftreservoir das Backup-Druckluftreservoir für das zweite Bremssteuermodul, während das dem zweiten Bremssteuermodul zugeordnete Druckluftreservoir das Backup-Druckluftreservoir für das erste Bremssteuermodul bildet. Möglich ist hierbei, dass die Zuführleitungen von den Druckluftreservoirs jeweils verzweigen zu den beiden Bremssteuermodulen.

Für einen weiteren Vorschlag der Erfindung ist ein Ausgang der Druckluftaufbereitung, der (über Leitungsverbindungen mit oder ohne pneumatischen Bauelementen) mit den zweiten Eingangsanschlüssen der Bremssteuermodule verbunden ist und somit im Backup-Fall für die Druckluftversorgung genutzt wird, mit den Ausgängen, die über Druckluftreservoirs mit den ersten Eingangsanschlüssen der Bremssteuermodule verbunden sind, verbunden. Über diese Verbindung kann dann für die Backup-Druckluftversorgung die Druckluft aus den Druckluftreservoirs genutzt werden.

Als Backup-Druckluftreservoir kann beispielsweise ein zusätzliches Druckluftreservoir bereitgestellt werden, welches ausschließlich der Backup-Druckluftversorgung dient. Möglich ist aber auch, dass das Backup-Druckluftreservoir zu weiteren Zwecken eingesetzt ist und beispielsweise ein Druckluftreservoir eines Luftfederungskreises, eines Anhängerbremskreises, eines Feststellbremskreises oder eines Nebenverbraucherkreises oder anderweitigen Verbraucherkreises oder sogar ein Druckluftreservoir für ein anderes Bremssteuermodul ist.

Ein weiterer Aspekt stellt eine Druckluftaufbereitungseinheit für ein Nutzfahrzeug dar. Die Druckluftaufbereitungseinheit weist einen Druckregler, einen Lufttrockner und Ausgänge für Verbraucherkreise (insbesondere mindestens zwei Betriebsbremskreise, einen Luftfederungskreis, einen Anhängerbremskreis, einen Federspeicherbremskreis und/oder einen Nebenverbraucherkreis) auf. Möglich ist, dass den Ausgängen mindestens ein Kreisschutzventil vorgeordnet ist, über welches/welche bspw.
- eine Sicherung eines Mindestdruckes in einem nachgeordneten Verbraucherkreis,
- eine Vorgabe eines Maximaldrucks,
- eine Ermöglichung einer Querspeisung zwischen einzelnen Verbraucherkreisen und/oder
- eine Steuerung einer Befüllungsreihenfolge
erfolgen kann. Hinsichtlich dieser Aspekte entspricht die Druckluftaufbereitungseinheit u. U. aus dem Stand der Technik bekannten Druckluftaufbereitungseinheiten. Erfindungsgemäß ist die Druckluftaufbereitungseinheit mit einem zusätzlichen Ausgang ausgestattet, an welchen ein Backupkreis angeschlossen werden kann, über welchen zuvor genannte Bremssteuermodule redundant mit Druckluft versorgt werden können. Hierbei ist vorzugsweise der zusätzliche Ausgang an Eingangsanschlüsse von zwei Bremssteuermodulen angeschlossen. Hingegen ist an den zusätzlichen Ausgang kein üblicher Verbraucherkreis (nämlich kein Betriebsbremskreis, kein Luftfederungskreis, kein Anhängerbremskreis, kein Federspeicherbremskreis und kein Nebenverbraucherkreis) angeschlossen. Eine mit einem derartigen zusätzlichen Ausgang für einen Backupkreis ausgestattete Druckluftaufbereitungseinheit kann vorteilhaft in einer Bremsanlage eingesetzt werden, wie diese zuvor erläutert worden ist.

Für eine Weiterbildung der Druckluftaufbereitungseinheit zweigt der zusätzliche Ausgang für den Backupkreis über eine Kreisleitung unmittelbar von einer Zentralleitung der Druckluftaufbereitungseinheit ab.

Für eine alternative Ausgestaltung ist der zusätzliche Ausgang für den Backupkreis über eine dem zusätzlichen Ausgang zugeordnete Kreisleitung und mindestens eine Zweigleitung mit einer Kreisleitung für einen anderen Verbraucherkreis, insbesondere mit einer Kreisleitung für einen Betriebsbremskreis, verbunden. Hierbei zweigt die Zweigleitung vorzugsweise stromabwärts des Kreisschutzventils der Kreisleitung für den anderen Verbraucherkreis von dieser Kreisleitung ab. Möglich ist, dass in der Zweigleitung ein drucksicherndes Rückschlagventil angeordnet ist.

Eine weitere Lösung der der Erfindung zugrundeliegenden Aufgabe stellt eine Verwendung einer Druckluftaufbereitungseinheit der zuvor erläuterten Art mit einem zusätzlichen Ausgang für einen Backupkreis für eine Bremsanlage, wie diese zuvor beschrieben worden ist, dar.

Im Folgenden wird die Erfindung anhand der Figuren weiter erläutert und beschrieben.

### KURZBESCHREIBUNG DER FIGUREN

### FIGURENBESCHREIBUNG

In den Figuren werden für unterschiedliche Ausführungsbeispiele oder auch in einem Ausführungsbeispiel für Bauelemente, welche gleiche oder zumindest teilweise ähnliche technische Ausgestaltungen und/oder Funktionen aufweisen, dieselben Bezugszeichen verwendet. Werden in einem Ausführungsbeispiel Bauelemente mit gleichen Bezugszeichen gekennzeichnet, werden diese durch ergänzende Buchstaben a, b, ... voneinander unterschieden. In diesem Fall wird dann in der Beschreibung auch nur das Bezugszeichen ohne ergänzenden Buchstaben genannt, wobei diese Beschreibung dann für sämtliche mit dem Bezugszeichen gekennzeichnete (und in der Figuren durch den ergänzenden Buchstaben unterschiedene) Bauelemente gelten kann. Einzelne Komponenten einer Ausführungsform können je nach Bedarf und angestrebter Wirkung auch Einsatz finden für andere dargestellte und beschriebene Ausführungsformen der Bremsanlage, wobei diese dann alternativ oder zusätzlich zu den dargestellten Komponenten der anderen Ausführungsformen der Bremsanlage Einsatz finden können.

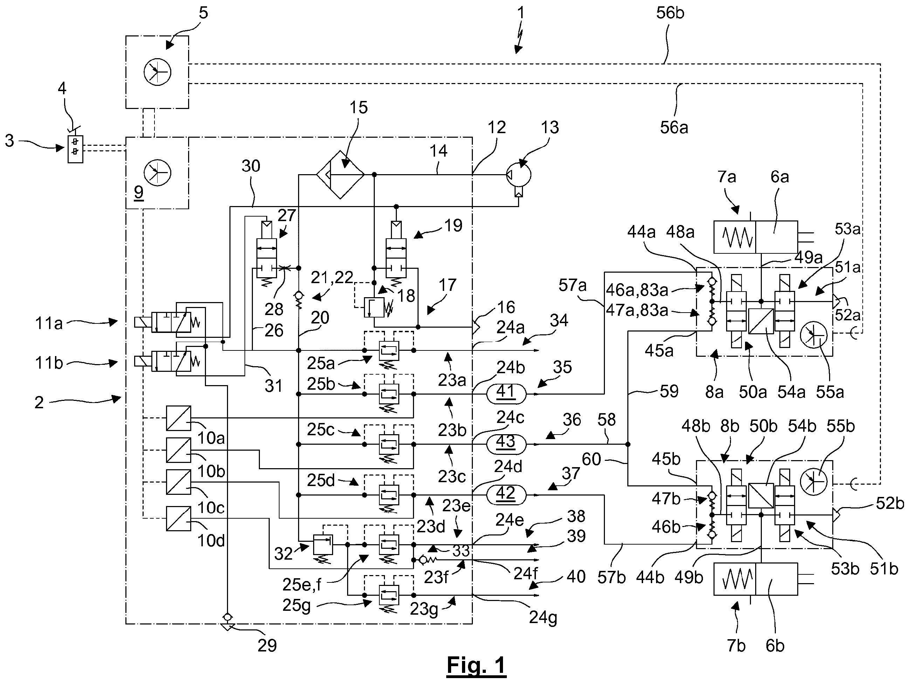

Eine Bremsanlage 1 gemäß **Fig. 1** weist eine Druckluftaufbereitungseinheit2, einen Bremssignalgeber 3 mit einem Bremspedal 4 (wobei hier der Bremssignalgeber 3 mit zwei Kanälen zur Erzeugung von zwei elektrischen Bremssignalen ausgestattet sein kann und/oder der Bremssignalgeber 3 ausschließlich ein elektrisches Bremssignal erzeugen kann), eine zentrale Bremssteuereinheit 5, Betriebsbremszylinder 6 (die hier Teil eines Kombi-Federspeicherbremszylinders 7 sind) und Bremssteuermodule 8 auf. Gemäß Fig. 1 sind zwei Betriebsbremszylinder 6a, 6b bzw. Kombi-Federspeicherbremszylinder 7a, 7b vorhanden, denen jeweils ein erstes Bremssteuermodul 8a bzw. ein zweites Bremssteuermodul 8b zugeordnet ist.

Die Druckluftaufbereitungseinheit 2 verfügt über eine Steuereinheit 9. Der Steuereinheit 9 werden über einen Eingangsanschluss der Druckluftaufbereitungseinheit 2 elektrische Bremssignale des Bremssignalgebers 3 zugeführt. Die Steuereinheit 9 leitet die Bremssignale (unverändert oder unter Modifikation auf Grundlage weiterer Betriebsgrößen) an die zentrale Bremssteuereinheit 5 weiter. Die Steuereinheit 9 empfängt einerseits Messsignale von Drucksensoren 10a, 10b, 10c, 10d.Andererseits dient die Steuereinheit 9 der Ansteuerung von Magnetventilen 11 der Druckluftaufbereitungseinheit 2, um den Betrieb der Druckluftaufbereitungseinheit 2, insbesondere eine Druckregelung und/oder eine Umschaltung zwischen einem Lastbetrieb und einem Regenerationsbetrieb, zu steuern.

Die Druckluftaufbereitungseinheit 2 wird über einen Eingangsanschluss 12 von einem Kompressor 13 mit Druckluft versorgt. Der Eingangsanschluss 12 ist über eine Eingangsleitung 14 mit einem Lufttrockner 15 verbunden. Von der Eingangsleitung 14 zweigt ein zu einer Entlüftung 16 der Druckluftaufbereitungseinheit 2 führender Entlüftungszweig 17 ab. In dem Entlüftungszweig 17 sind ein Sicherheitsventil 18 und ein pneumatisch angesteuertes Sperrventil 19, welches ohne Steuerdruck seine Sperrstellung einnimmt, parallelgeschaltet.

Die von dem Kompressor 13 geförderte Druckluft strömt von der Eingangsleitung 14 durch den Lufttrockner 15 zu einer Zentralleitung 20, deren Druck durch ein Sicherungsventil 21, hier ein Rückschlagventil 22, gesichert ist. Die Zentralleitung 20 verzweigt in Kreisleitungen 23, die zu Ausgängen 24 führen, die wiederum zu unterschiedlichen Verbraucherkreise führen. In den Kreisleitungen 23 sind jeweils Kreisschutzventile 25 angeordnet. Mittels der Kreisschutzventile 25 erfolgt in grundsätzlich bekannter Weise eine Drucksicherung in den Verbraucherkreisen, eine Steuerung der Befüllungsreihenfolge der Verbraucherkreise und/oder eine Ermöglichung einer Querspeisung eines Verbraucherkreises durch einen anderen Verbraucherkreis.

Für das in Fig. 1 dargestellte Ausführungsbeispiel sind die Kreisschutzventile 25 als passive Ventile ausgebildet, deren Betriebsstellung ausschließlich von den Drücken in den Kreisleitungen 23 eingangs- und/oder ausgangsseitig des Kreisschutzventils 25 abhängen. Abweichend zu den dargestellten Ausführungsformen können aber auch elektropneumatisch vorgesteuerte Kreisschutzventile 25 in den Kreisleitungen 23 Einsatz finden, und/oder die Kreisschutzventile 25 können unmittelbar elektronisch durch die Steuereinheit 9 gesteuert sein, wie dies aus vielfältigen Druckschriften des Standes der Technik für Druckluftaufbereitungseinheiten 2 bekannt ist.

Für das dargestellte Ausführungsbeispiel sind die Kreisschutzventile 25 als Überströmventile mit beschränkter Rückströmung ausgebildet. An den Kreisleitungen 23b, 23c, 23d und 23e sind über Zweigleitungen die Drucksensoren 10a, 10b, 10c, 10d angeschlossen.

Als Besonderheit ist den Kreisleitungen 23e, 23f, 23g ein gemeinsames Druckbegrenzungsventil 32 vorgeordnet. Des Weiteren nutzen die Kreisleitungen 23e, 23f dasselbe Kreisschutzventil 25e, f, wobei in der Kreisleitung 23f stromabwärts des Kreisschutzventils 25e,f ein Rückschlagventil 33 angeordnet ist.

Das Sicherungsventil 21 ist durch eine Bypassleitung 26 umgangen, in welcher ein Regenerationsventil 27 und eine pneumatische Drossel 28 in Reihenschaltung angeordnet sind. Das Regenerationsventil 27 ist für das dargestellte Ausführungsbeispiel als pneumatisch angesteuertes 2/2-Wegeventil oder Sperrventil ausgebildet, welches ohne anliegenden Steuerdruck seine Sperrstellung einnimmt.

Die Magnetventile 11a, 11b sind als 3/2-Wegeventile ausgebildet, wobei ein Eingangsanschluss der Magnetventile 11a, 11b über ein von der Zentralleitung 20 abzweigende Zweigleitung mit Druckluft versorgt wird, während jeweils ein Entlüftungsanschluss der Magnetventile 11a, 11b mit einer Entlüftung 29 der Druckluftaufbereitungseinheit 2 verbunden ist. Der dritte Anschluss des Magnetventils 11a ist mit einer Steuerleitung 30 verbunden, welche mit einem Steueranschluss des Sperrventils 19 sowie mit einem Steueranschluss des Kompressors 13 zur Aktivierung und Deaktivierung desselben verbunden ist. Hingegen ist der dritte Anschluss des Magnetventils 11b mit einer Steuerleitung 31 verbunden, die mit dem Steueranschluss des Regenerationsventils 27 verbunden ist.

Die Betriebsweise der Druckluftaufbereitungseinheit 2 ist wie folgt: Im Förderbetrieb des Kompressors 13 befindet sich das Magnetventil 11a in der Entlüftungsstellung, so dass das Sperrventil 19 seine Sperrstellung einnimmt. Von dem Kompressor 13 geförderte Druckluft wird in dem Lufttrockner 15 getrocknet und gelangt über das Sicherungsventil 21 zu der Zentralleitung 20. Entsprechend der durch die Öffnungsdrücke der Kreisschutzventile 25 vorgegebenen Befüllreihenfolge nehmen die Kreisschutzventile 25 sukzessive Ihre Öffnungsstellung ein, womit eine Befüllung der zugeordneten Verbraucherkreise erfolgen kann. Wird mit zunehmender Befüllung ein Maximaldruck in der Eingangsleitung 14 überschritten, erfolgt eine Druckbegrenzung über das Sicherheitsventil 18.

Während einer derartigen sogenannten Lastphase, mittels welcher eine Erstbefüllung bei Inbetriebnahme des Nutzfahrzeugs erfolgen kann oder auch eine Nachfüllung während des Betriebs des Nutzfahrzeugs nach einem Abfall des Betriebsdrucks in einem Verbraucherkreis erfolgen kann, befindet sich das Magnetventil 11b in der Entlüftungsstellung, so dass das Regenerationsventil 27 seine Sperrstellung einnimmt.

Ein Wechsel von dem Lastbetrieb in einen Regenerationsbetrieb erfolgt durch eine Umschaltung der Magnetventile 11a, 11b, so dass diese beide ihre Belüftungsstellung einnehmen. Die Druckbeaufschlagung der Steuerleitung 30 hat zur Folge, dass der Kompressor 13 deaktiviert wird und gleichzeitig das Sperrventil 19 in seine Durchlassstellung überführt wird. Die Druckbeaufschlagung der Steuerleitung 31 hat zur Folge, dass das Regenerationsventil 27 seine Durchlassstellung einnimmt. Dies hat wiederum zur Folge, dass Druckluft aus den Verbraucherkreisen (bei einem Druck oberhalb des Sicherungsdrucks der Kreisschutzventile 25) von der Zentralleitung 20 über die Bypassleitung 26 mit dem geöffneten Regenerationsventil 27 rückwärts durch den Lufttrockner 15 und von dort durch das Sperrventil 19 zu der Entlüftung strömen kann. Infolge der Wirkung der Drossel 28 ist dieser Regenerationsluftstrom verlangsamt. Der Regenerationsluftstrom entzieht dem Trocknungsmittel in dem Lufttrockner 15 zur Regeneration desselben Feuchtigkeit, die über die Entlüftung 16 abgeführt wird.

An dem Ausgang 24a ist als Verbraucherkreis ein Luftfederungskreis 34 angeschlossen. An dem Ausgang 24b ist als Verbraucherkreis ein erster Betriebsbremskreis 35 angeschlossen. An dem Ausgang 24c ist als Verbraucherkreis ein Backupkreis 36 angeschlossen. An dem Ausgang 24d ist als Verbraucherkreis ein zweiter Betriebsbremskreis 37 angeschlossen. An dem Ausgang 24e ist als Verbraucherkreis ein Anhängerbremskreis 38 angeschlossen. An dem Ausgang 24f ist als Verbraucherkreis ein Federspeicherbremskreis 39 oder Parkbremskreis angeschlossen. An dem Ausgang 24g ist als Verbraucherkreis mindestens ein Nebenverbraucherkreis 40 angeschlossen.

Die Betriebsbremskreise 35, 37 verfügen jeweils über ein Druckluftreservoir 41, 42, während der Backupkreis 36 über ein Backup-Druckluftreservoir 43 verfügt. Die Druckluftreservoirs 41, 42 sowie das Backup-Druckluftreservoir 43 sind für das in Fig. 1 dargestellte Ausführungsbeispiel als separate Vorratsbehälter ausgebildet. Die weiteren Verbraucherkreise können mit oder ohne Druckluftreservoirs oder Vorratsbehälter ausgebildet sein.

Die Bremssteuermodule 8a, 8b verfügen jeweils über einen ersten Eingangsanschluss 44 und einen zweiten Eingangsanschluss 45. In den Bremssteuermodulen 8 münden die beiden Eingangsanschlüsse 44, 45 über Rückschlagventile 46, 47 in eine Eingangsleitung 48. Die Rückschlagventile 46, 47 öffnen sich (bei einer Überschreitung eines vorbestimmten Öffnungsdrucks) in Richtung der Eingangsleitung 48, aber sperren eine Strömung in entgegengesetzte Richtung.

Die Bremssteuermodule 8 verfügen über einen Ausgangsanschluss 49, der mit der Betriebsbremskammer des zugeordneten Betriebsbremszylinders 6 oder Kombi-Federspeicherbremszylinders 7 verbunden ist.

Die Eingangsleitung 48 ist über ein Magnetventil 50 mit dem Ausgangsanschluss 49 verbunden. Das Magnetventil 50 ist hierbei als Sperrventil oder 2/2-Wege-Magnetventil ausgebildet, wobei dieses vorzugsweise als bistabiles Ventil ausgebildet ist, welches über einen kurzen Steuerimpuls elektrisch seine Betriebsstellung wechseln kann und eine einmal eingenommene Betriebsstellung ohne Bestromung des Magnetventils 50 beibehält. In der Öffnungsstellung des Magnetventils 50 kann somit an einem Eingangsanschluss 44, 45 des Bremssteuermoduls 8 anstehende Druckluft zu dem Ausgangsanschluss 49 und damit dem Betriebsbremszylinder 6 gelangen. Über einen Entlüftungszweig 51 ist der Ausgangsanschluss 49 mit einer Entlüftung 52 verbunden. In dem Entlüftungszweig 51 ist ein Magnetventil 53 angeordnet. Für das dargestellte Ausführungsbeispiel ist auch das Magnetventil 53 als Sperrventil oder 2/2-Wege-Magnetventil ausgebildet und vorzugsweise ein bistabiles Magnetventil, wie dies für das Magnetventil 50 erläutert worden ist.

Der Druck an dem Ausgangsanschluss 49 wird über einen in das Bremssteuermodul 8 integrierten Drucksensor 54 erfasst, womit auch eine Regelung des Bremsdrucks möglich ist.

Die Bremssteuermodule 8 verfügen jeweils über eine in diese integrierte elektronische Steuereinheit 55. Die Steuereinheiten 55 empfangen über Steuerleitungen 56 Steuersignale von der zentralen Bremssteuereinheit 5 und steuern auf Grundlage dieser Steuersignale und unter Berücksichtigung des Messsignals der Drucksensoren 54 die Magnetventile 50, 53 an.

Der Eingangsanschluss 44a des Bremssteuermoduls 8a ist über eine Versorgungsleitung 57a mit dem Druckluftreservoir 41 verbunden, während der Eingangsanschluss 44b des Bremssteuermoduls 8b über eine Versorgungsleitung 57b mit dem Druckluftreservoir 42 verbunden ist. Eine mit dem Backup-Druckluftreservoir 43 verbundene Versorgungsleitung 58 verzweigt in Versorgungsleitungszweige 59, 60. Der Versorgungsleitungszweig 59 ist mit dem Eingangsanschluss 45a des Bremssteuermoduls 8a verbunden, während der Versorgungsleitungszweig 60 mit dem Eingangsanschluss 45b des Bremssteuermoduls 8b verbunden ist.

Der Betrieb der Bremsanlage 1 ist wie folgt: Sind infolge des an sich bekannten Betriebs des Kompressors 13 und der Druckluftaufbereitungseinheit 2 die Verbraucherkreise gefüllt, kann der Fahrer über die Betätigung des Bremspedals 4 ein elektrisches Bremssignal erzeugen. Bei der Anforderung einer Erhöhung der Bremswirkung steuert die Steuereinheit 55a das Magnetventil 50a in die Öffnungsstellung. Dies hat zur Folge, dass Druckluft von dem Druckluftreservoir 41 über den Eingangsanschluss 44a zu dem Betriebsbremszylinder 6a strömen kann und/oder Druckluft von dem Backup-Druckluftreservoir 43 über den Eingangsanschluss 45a zu dem Betriebsbremszylinder 6a strömen kann. Entsprechend steuert die Steuereinheit 55b das Magnetventil 50b des Bremssteuermoduls 8b in die Öffnungsstellung, so dass Druckluft von dem Druckluftreservoir 42 über den Eingangsanschluss 44b zu dem Betriebsbremszylinder 6b strömen kann und/oder Druckluft von dem Backup-Druckluftreservoir 43 über den Eingangsanschluss 45b zu dem Betriebsbremszylinder 6b strömen kann. Soll hingegen, indiziert durch das Lösen des Bremspedals 4, eine Verringerung der Bremsdrucks erfolgen, steuert die Steuereinheit 45 der Bremssteuermodule 8 die Magnetventile 53 in die Öffnungsstellung, während die Magnetventile 50 in die Sperrstellung gesteuert werden. Somit kann eine Entlüftung der Betriebsbremszylinder 6 herbeigeführt werden.

Das Backup-Druckluftreservoir 43 ist für eine Backup-Belüftung der Betriebsbremszylinder 6a, 6b mit beiden Bremssteuermodulen 8a, 8b verbunden. Möglich ist, dass permanent eine kumulative Druckluftversorgung des Bremssteuermoduls 8a bzw. 8b sowohl über das Druckluftreservoir 41 als auch das Backup-Druckluftreservoir 43 bzw. das Druckluftreservoir 42 und das Backup-Druckluftreservoir 43 erfolgt.

Kommt es zu einer Leckage in einem Betriebsbremskreis 35, 37, reduziert sich der Systemdruck auf den Sicherungsdruck des Kreisschutzventils 25b, 25d, welches dem defekten Betriebsbremskreis 35, 37 zugeordnet ist. In diesem Fall kann dem Fahrer ein Warnhinweis, insbesondere in Form einer Warnlampe, gegeben werden. Der Fahrer ist dennoch in der Lage, den Fahrbetreib fortzusetzen, da infolge der Backup-Druckluftversorgung hinreichender Versorgungsdruck für sämtliche Bremssteuermodule 8 bereitgestellt wird.

Bei abweichender Gestaltung der Kreisschutzventile 25, der Öffnungsdrücke der Kreisschutzventile 25 und/oder der Schließdrücke der Kreisschutzventile 25 und/oder unterschiedlichen Öffnungsdrücken der Rückschlagventile 46, 47 oder Einsatz anderer Ventilelemente als die Rückschlagventile 46, 47 kann auch für einen normalen Fahrbetrieb die Druckluftversorgung über die Druckluftreservoirs 41, 42 priorisiert werden, so dass eine Druckluftversorgung der Bremssteuermodule 8a, 8b durch das Backup-Druckluftreservoir 43 nur im Backup-Fall erfolgt.

Ein Backup-Fall liegt insbesondere vor, wenn eine Leckage in einem der Betriebsbremskreise 35, 37, insbesondere des Druckluftreservoirs 41, 42 oder einer Versorgungsleitung 57a, 57b, vorliegt. Kommt es zu einer Entlüftung des Betriebsbremskreises 35, 37 in einem derartigen Backup-Fall, ist auch (zumindest für einen beschränkten Zeitraum) eine Druckluftversorgung über das Backup-Druckluftreservoir 43 gewährleistet. Mittels der Druckluftreservoirs 41, 42 einerseits und des Backup-Druckluftreservoirs 43 ist eine redundante Druckluftversorgung gewährleistet.

Für das in Fig. 1 dargestellte Ausführungsbeispiel dient exemplarisch jedes Bremssteuermodul 8a, 8b ausschließlich der Druckbeaufschlagung eines zugeordneten Betriebsbremszylinders 6a, 6b, der wiederum einem einzigen Fahrzeugrad zugeordnet ist. Es versteht sich, dass an einen Ausgangsanschluss 49 eines Bremssteuermoduls 8 auch mehrere Betriebsbremszylinder 6 angeschlossen sein können, welche dann beispielsweise einer Fahrzeugachse, einer Fahrzeugseite oder einem Kreis eines zwei- oder mehrkreisigen Betriebsbremskreises zugeordnet sein können.

In Fig. 1 sind lediglich die Druckluftversorgungen der Bremssteuermodule 8 redundant ausgebildet. Ergänzend können auch die Steuerleitungen 56a, 56b redundant ausgebildet werden. In diesem Fall können auch redundante Bremssteuereinheiten 5a, 5b eingesetzt werden, wobei auch möglich ist, dass als Backup-Steuereinheit für die Bremssteuereinheit 5 die Steuereinheit 9 der Druckluftaufbereitungseinheit 2 (oder eine anderweitige, dann multifunktionale Steuereinheit) eingesetzt ist.

Für die folgenden Ausführungsbeispiele gilt grundsätzlich das zuvor Gesagte entsprechend, sofern keine anderslautenden Beschreibungen folgen:

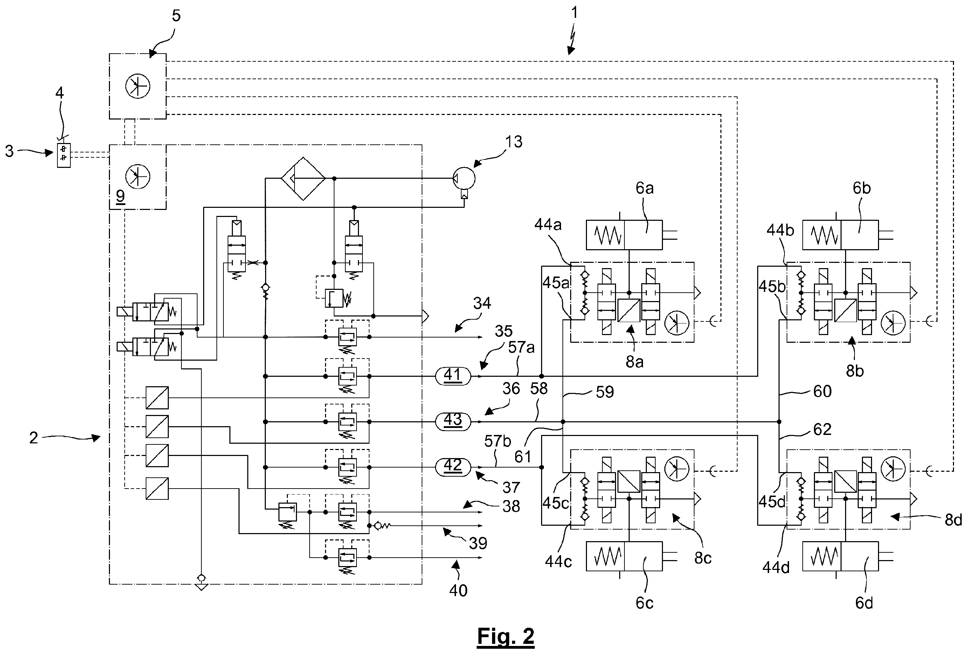

Fig. 2 zeigt eine Ausführungsform, bei welcher vier Bremssteuermodule 8a, 8b, 8c, 8d vorhanden sind, die jeweils einem Betriebsbremszylinder 6a, 6b, 6c, 6d zugeordnet sind, welche jeweils einem Fahrzeugrad des Nutzfahrzeugs zugeordnet sind. Hierbei sind die Bremssteuermodule 8a, 8b mit zugeordneten Betriebsbremszylindern 6a, 6b einer Vorderachse des Nutzfahrzeugs zugeordnet, während die Bremssteuermodule 8c, 8d mit zugeordneten Betriebsbremszylindern 6c, 6d einer Hinterachse des Nutzfahrzeugs zugeordnet sind. In diesem Fall sind die Bremssteuermodule 8a, 8b Teil des ersten Betriebsbremskreises 35, während die Bremssteuermodule 8c, 8d Teil des zweiten Betriebsbremskreises 37 sind. Zu diesem Zweck verzweigen die Versorgungsleitungen 57a, 57b jeweils in zwei Versorgungsleitungszweige, die dann jeweils mit einem zugeordneten Eingangsanschluss 44a, 44b bzw. 44c, 44d verbunden sind. Hingegen verzweigt die von dem Backup-Druckluftreservoir 43 ausgehende Versorgungsleitung 58 in die Versorgungsleitungszweige 59, 60, 61, 62, die mit den Eingangsanschlüssen 45a, 45b, 45c, 45d der Bremssteuermodule 8a, 8b, 8c, 8d verbunden sind. Somit kann das Backup-Druckluftreservoir 43 in diesem Fall für die Backup-Druckluftversorgung von vier Bremssteuermodulen 8a, 8b, 8c, 8d dienen.

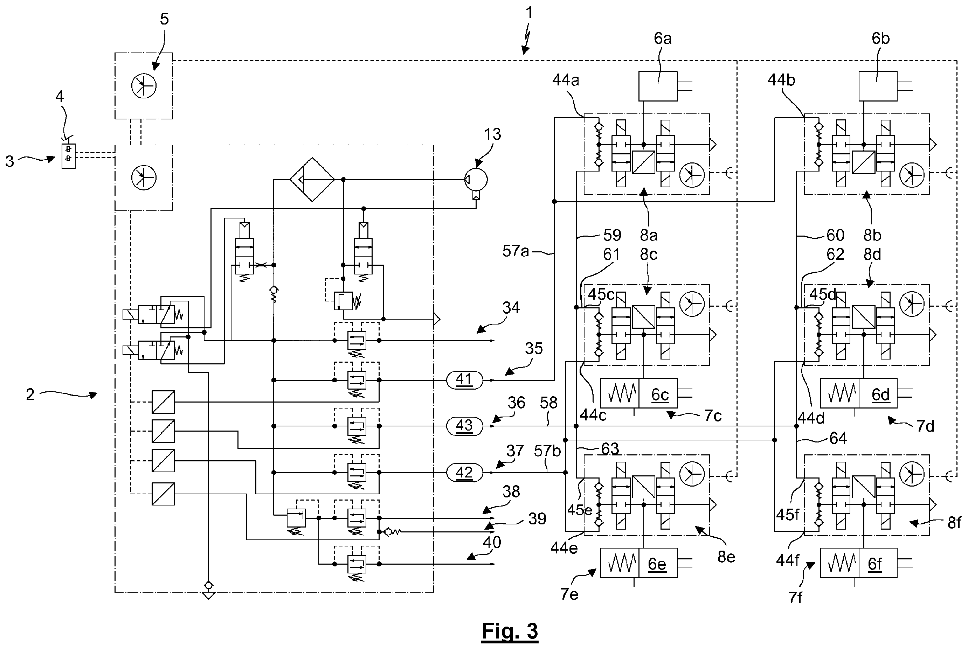

Gemäß Fig. 3 finden sechs Bremssteuermodule 8a, 8b, 8c, 8d, 8e, 8f Einsatz, die jeweils Betriebsbremszylindern 6a, 6b, 6c, 6d, 6e, 6f zugeordnet sind, die wiederum jeweils einem Fahrzeugrad des Nutzfahrzeugs zugeordnet sind. Hierbei sind die Bremssteuermodule 8a, 8b mit zugeordnetem Betriebsbremszylinder 6a, 6b einer Vorderachse zugeordnet, während die Bremssteuermodule 8c, 8d mit zugeordneten Betriebsbremszylindern 6c, 6d einer mittleren Fahrzeugachse oder einer vorderen Fahrzeugachse einer hinteren Doppelachse zugeordnet sind und die Bremssteuermodul 8e, 8f mit zugeordneten Betriebsbremszylindern 6e, 6f einer hinteren Fahrzeugachse oder einer hinteren Fahrzeugachse einer hinteren Doppelachse zugeordnet sind. Hierbei sind die Betriebsbremszylinder 6a, 6b der Vorderachse ohne Federspeicherteil ausgebildet, während die Betriebsbremszylinder 6c, 6d, 6e, 6f Teil von Kombi-Federspeicherbremszylindern 7c, 7d, 7e, 7f sind.

In diesem Fall sind die der Vorderachse zugeordneten Bremssteuermodule 8a, 8b Teil des Betriebsbremskreises 35, während die Bremssteuermodule 8c, 8d, 8e, 8f Teil des Betriebsbremskreises 37 sind.

Wie für Fig. 2 erläutert wurde, verzweigt die Versorgungsleitung 57a für die Verbindung mit den Eingangsanschlüssen 44a, 44b der Bremssteuermodule 8a, 8b. Da an den zweiten Betriebsbremskreis 37 vier Bremssteuermodule 8c, 8d, 8e, 8f angeschlossen sind, verzweigt die Versorgungsleitung 57b in vier Leitungszweige, die mit den Eingangsanschlüssen 44c, 44d, 44e, 44f der Bremssteuermodule 8c, 8d, 8e, 8f verbunden sind. Die Versorgungsleitung 58 verzweigt in sechs Versorgungsleitungszweige 59, 60, 61, 62, 63, 64, die jeweils mit einem zugeordneten Eingangsanschluss 45a, 45b, 45c, 45d, 45e, 45f verbunden sind.

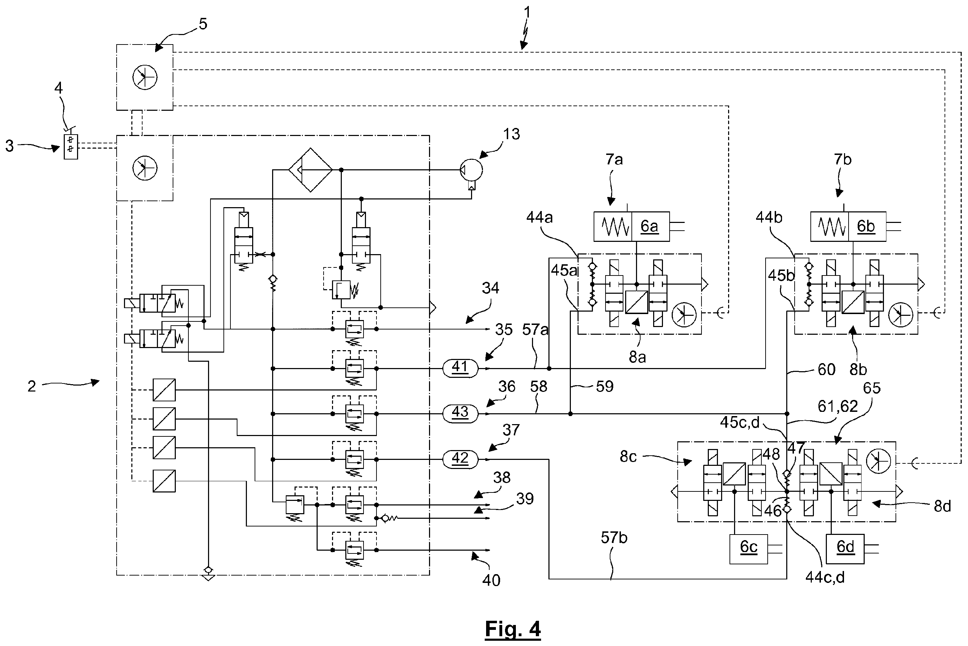

**Fig. 4** zeigt ein Ausführungsbeispiel, bei welchem die einer Vorderachse zugeordneten Bremssteuermodule 8a, 8b (entsprechend den Fig. 2 und 3 mit zugeordneter Beschreibung) Teil des ersten Betriebsbremskreises 35 sind und ausschließlich von dem Druckluftreservoir 41 versorgt werden. In diesem Fall sind die einer Hinterachse zugeordneten Bremssteuermodule 8c, 8d zu einer gemeinsamen Bremssteuermoduleinheit 65 zusammengefasst, die hinsichtlich der Funktion grundsätzlich einem 2-Kanal-Druckregelmodul entspricht, wie dieses für den eingangs genannten Stand der Technik beschrieben ist (allerdings ohne Einsatz eines Relaisventils). In diesem Fall verfügt die Bremssteuermoduleinheit 65 lediglich über einen Eingangsanschluss 44c,d, der über die Versorgungsleitung 57b mit dem Druckluftreservoir 42 verbunden ist, und einen Eingangsanschluss 45c,d, der über einen einzigen Versorgungsleitungszweig 61,62 mit der Versorgungsleitung 58 und über diese mit dem Backup-Druckluftreservoir 43 verbunden ist.

In der Bremssteuermoduleinheit 65 verzweigt die Eingangsleitung 48 hinter den Rückschlagventilen 46, 47 in zwei Eingangsleitungszweige, welche dann jeweils der Druckluftversorgung der beiden Bremssteuermodule 8c, 8d dienen.

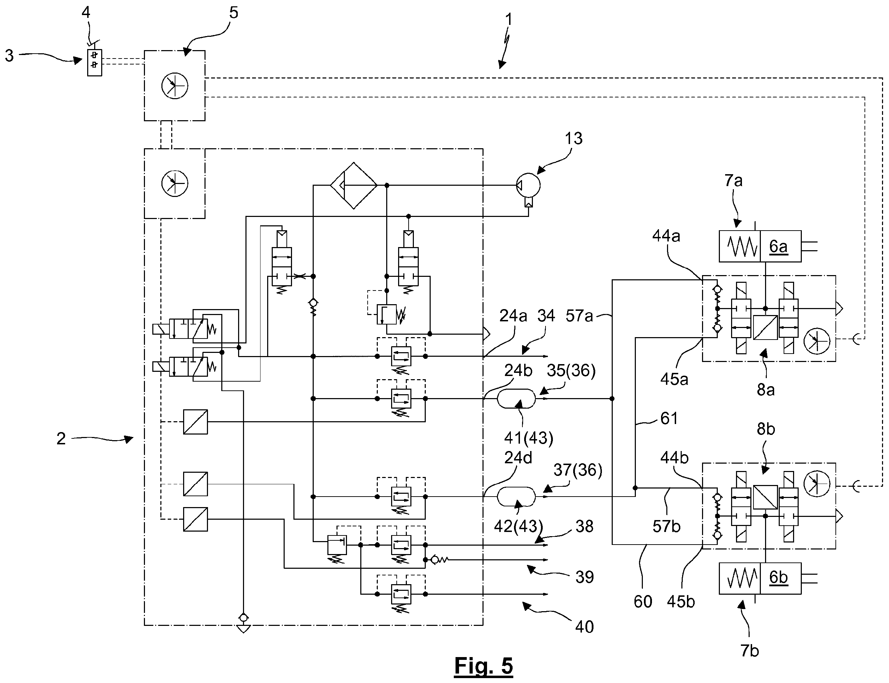

Die Bremssteuermodule 8a, 8b gemäß **Fig. 5** entsprechen hinsichtlich ihrer Ausgestaltung und der Zuordnung zu Betriebsbremszylindern 6a, 6b von Kombi-Federspeicherbremszylindern 7a, 7b dem Ausführungsbeispiel gemäß Fig. 1. Abweichend zu Fig. 1 kommuniziert gemäß Fig. 5 aber der Bremssignalgeber 3 nicht mit der Steuereinheit 9 der Druckluftaufbereitungseinheit 2, sondern mit der Bremssteuereinheit 5.

Die Druckluftaufbereitungseinheit 2 verfügt abweichend zu der Druckluftaufbereitungseinheit 2 gemäß Fig. 1 nicht über die Kreisleitung 23c und den Ausgang 24c, womit in diesem Fall die Bremsanlage 1 für die Druckluftversorgung der Bremssteuermodule 8a, 8b nicht über drei Druckluftreservoirs verfügt. Vielmehr werden die Bremssteuermodule 8a, 8b ausschließlich über zwei Ausgänge 24b, 24d der Druckluftaufbereitungseinheit 2 mit Druckluft versorgt. An den Ausgang 24b ist ein Druckluftreservoir 41 angeschlossen, welches über die Versorgungsleitung 57a mit dem Eingangsanschluss 44a des Bremssteuermoduls 8a verbunden ist. Allerdings zweigt für diese Ausführungsform von der Versorgungsleitung 57a ein Versorgungsleitungszweig 60 ab, der mit dem Eingangsanschluss 45b des Bremssteuermoduls 8b verbunden ist. In der zuvor gewählten Nomenklatur erfolgt somit über den genannten Vorratsbehälter 41 sowohl die Versorgung des Bremssteuermoduls 8a im Normalbetrieb als auch die Backup-Versorgung des Bremssteuermoduls 8b im Backup-Fall. Somit bildet ein einziger Vorratsbehälter sowohl das Druckluftreservoir 41 bzgl. des Bremssteuermoduls 8a als auch das Backup-Druckluftreservoir 43 für das Bremssteuermodul 8b. In entsprechender Weise ist der Ausgang 24d mit einem Druckluftreservoir 42 verbunden, der wiederum über die Versorgungsleitung 57b mit dem Eingangsanschluss 44b des Bremssteuermoduls 8b verbunden ist. In diesem Fall zweigt von der Versorgungsleitung 57b ein Versorgungsleitungszweig 61 ab, der mit dem Eingangsanschluss 45a des Bremssteuermoduls 8a für die Backup-Druckluftversorgung verbunden ist. Damit bildet der an den Ausgang 24d angeschlossene Vorratsbehälter integral sowohl das Druckluftreservoir 42 (bzgl. des Bremssteuermoduls 8b) als auch das Backup-Druckluftreservoir 43 (bzgl. des Bremssteuermoduls 8a). Trotz des Einsatzes von lediglich zwei Druckluftbehältern ist für beide Bremssteuermodule 8a, 8b eine redundante Druckluftversorgung gewährleistet.

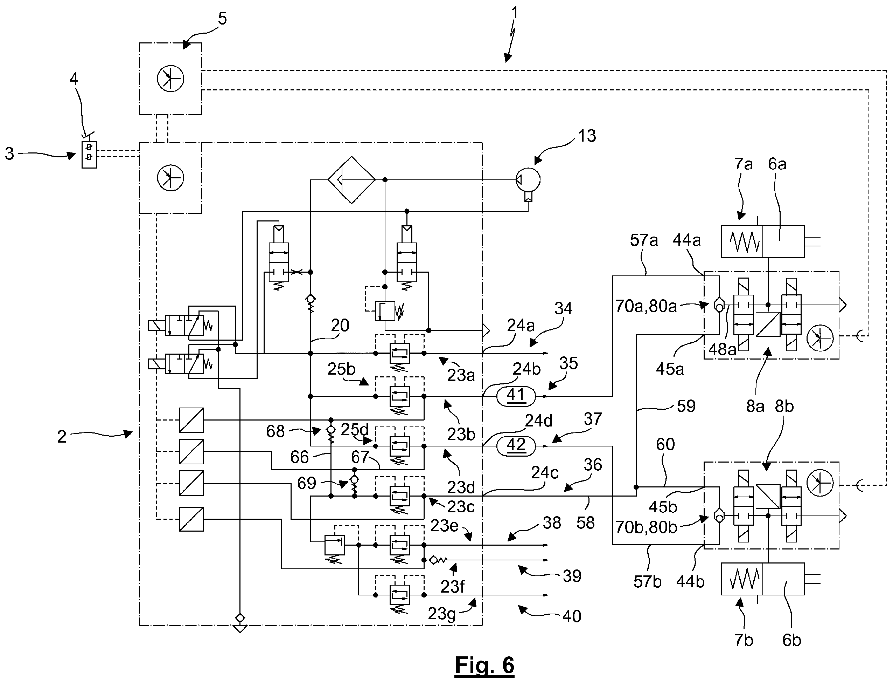

Für das Ausführungsbeispiel gemäß Fig. 6 ist die Druckluftaufbereitungseinheit 2 abweichend zu der Druckluftaufbereitungseinheit 2 gemäß den zuvor erläuterten Ausführungsbeispielen ausgebildet: Hier zweigen von der Zentralleitung unmittelbar lediglich die Kreisleitungen 23a, 23b, 23d ab. Die Kreisleitungen 23c, 23f und 23g sind über Zweigleitungen 66, 67 mit darin angeordneten, in Richtung der Zweigleitungen 23c, 23f, 23g öffnenden Rückschlagventilen 68, 69 stromabwärts der Kreisschutzventile 25b, 25d mit den Kreisleitungen 23b, 23d verbunden, so dass diese Kreisleitungen 23c, 23f, 23g (hinsichtlich der Kreisschutzventile 25b, 25d) als seriell nachgeordnet bezeichnet werden können. In diesem Fall ist in dem ersten Betriebsbremskreis 35 das Druckluftreservoir 41 über die Versorgungsleitung 57a mit dem Eingangsanschluss 44a des Bremssteuermoduls 8a verbunden. Entsprechend ist in dem zweiten Betriebsbremskreis 37 das Druckluftreservoir 42 über die Versorgungsleitung 57b mit dem Eingangsanschluss 44b des Bremssteuermoduls 8b verbunden. Der Backupkreis 36 weist kein Backup-Druckluftreservoir 43 auf. Vielmehr ist der Ausgang 24c der Druckluftaufbereitungseinheit 2 unmittelbar über die Versorgungsleitung 58 und die Versorgungsleitungszweige 59, 60 mit dem Eingangsanschluss 45a des Bremssteuermoduls 8a und dem Eingangsanschluss 45b des Bremssteuermoduls 8b verbunden.

Gemäß Fig. 6 findet in den Bremssteuermodulen 8 anstelle der Rückschlagventile 46, 47 ein Wechselventil 70 Einsatz, dessen erster Eingang mit einem Eingangsanschluss 44 verbunden ist, dessen zweiter Eingang mit einem Eingangsanschluss 45 verbunden ist und dessen Ausgang mit der Eingangsleitung 48 verbunden ist. Kommt es in einem Betriebsbremskreis, beispielsweise in dem Betriebsbremskreis 35, zu einer Leckage, kommt es zu einem Einbruch der Druckluftversorgung des Bremssteuermoduls 8a über die Versorgungsleitung 57a. Allerdings steht aus dem Betriebsbremskreis 37 und dem Druckluftreservoir 42 über die Zweigleitung 67, das Rückschlagventil 69, die Kreisleitung 23c, den Ausgang 24c und den Versorgungsleitungszweig 59 Druckluft an dem Eingangsanschluss 45a an, so dass das Wechselventil 70a die Druckluftversorgung der Eingangsleitung 48a des Bremssteuermoduls 8a gewährleisten kann. Somit gewährleistet das Druckluftreservoir 42 die Druckluftversorgung des Bremssteuermoduls 8b, und dieses Druckluftreservoir 42 dient gleichzeitig auch als Backup-Druckluftreservoir 43 für die Backup-Versorgung des Bremssteuermoduls 8a.

Das Entsprechende gilt bei einer Leckage in dem zweiten Betriebsbremskreis 37, wobei in diesem Fall eine Backup-Druckluftversorgung durch das Druckluftreservoir 41 über das Rückschlagventil 68, die Zweigleitung 66, die Kreisleitung 23c, den Ausgang 24c und den Versorgungsleitungszweig 60 für das Bremssteuermodul 8b erfolgt. In diesem Fall bildet somit ein Vorratsbehälter das Druckluftreservoir 41 zur Druckluftversorgung des Bremssteuermoduls 8a und gleichzeitig auch das Backup-Druckluftreservoir 43 für die Backup-Versorgung des Bremssteuermoduls 8b.

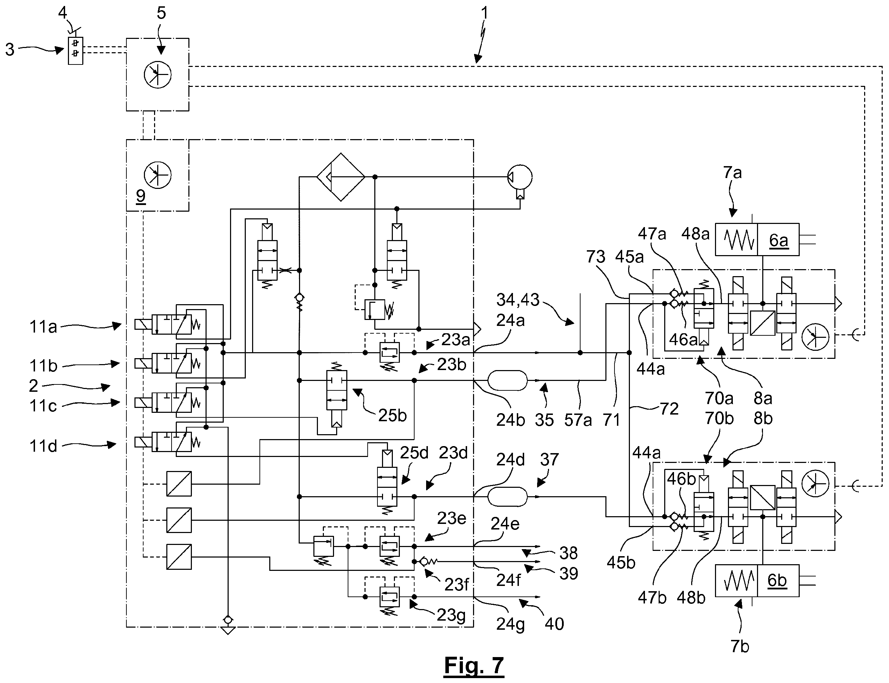

Gemäß Fig. 7 sind die Bremssteuermodule 8 abweichend zu den obigen Ausführungsbeispielen ausgebildet, indem die Eingänge 44, 45 nicht lediglich über Rückschlagventile 46, 47 in die Eingangsleitung 48 münden. Vielmehr ist zwischen die Ausgänge der Rückschlagventile 46, 47 und die Eingangsleitung 48 ein Ventil, insbesondere ein Umschaltventil 70, zwischengeschaltet. Je nach Betriebsstellung des Umschaltventils 70 kann die Eingangsleitung 48 über das zugeordnete Rückschlagventil mit dem Eingangsanschluss 44, dem Eingangsanschluss 45 und/oder beiden Eingangsanschlüssen 44, 45 verbunden werden. Für das dargestellte Ausführungsbeispiel ist das Umschaltventil 70 ein pneumatisch angesteuertes Umschaltventil. Dieses ist hier als 3/2-Wegeventil ausgebildet. In der in Fig. 7 wirksamen Schaltstellung des Umschaltventils 70, welche durch Beaufschlagung durch eine Feder ohne anliegenden Steuerdruck herbeigeführt ist, ist die Eingangsleitung 48 über die Rückschlagventile 46, 47 mit beiden Eingangsanschlüssen 44, 45 verbunden. Als Steuerdruck für das Umschaltventil 70 wird der Druck stromaufwärts des Rückschlagventils 46 an dem Eingangsanschluss 44 verwendet. Liegt an dem Eingangsanschluss 44 ein hinreichender Versorgungsdruck vor, wird das Umschaltventil 70 umgeschaltet in die andere Betriebsstellung, in welcher die Verbindung des Eingangsanschlusses 45 über das Rückschlagventil 47 mit der Eingangsleitung 48 abgesperrt ist, während die Verbindung des Eingangsanschlusses 44 über das Rückschlagventil 46 mit der Eingangsleitung 48 geöffnet ist. Liegt somit in den Betriebsbremskreisen 35, 37 hinreichender Versorgungsdruck vor, sind die Eingangsanschlüsse 45 der Bremssteuermodule 8 abgesperrt, so dass die Backup-Druckluftversorgung deaktiviert ist. Hingegen nimmt bei einem Druckabfall in den Betriebsbremskreisen 35, 37 das Umschaltventil 70 automatisch die andere Betriebsstellung ein, in welcher die Backup-Druckluftversorgung über den Eingangsanschluss 45 aktiviert ist. Ein Austritt von Druckluft, die über die Backup-Druckluftversorgung bereitgestellt wird, über den Defekt in dem Betriebsbremskreis ist vermieden durch die Absperrung dieses defekten Betriebsbremskreises über das Rückschlagventil 46. Es versteht sich, dass auch für die Ausführungsbeispiele in den anderen Fig. anstelle der dort eingesetzten Bremssteuermodule 8 ein Bremssteuermodul 8 gemäß Fig. 7 eingesetzt sein kann.

Gemäß Fig. 7 ist auch eine optionale Modifikation der Druckluftaufbereitungseinheit 2 und der Verbindung derselben mit den Verbraucherkreisen und den Bremssteuermodulen 8 erfolgt: Hier sind in den Kreisleitungen 23b, 23d als Kreisschutzventile 25b, 25d nicht passive Druckregelventile oder Drucksicherungsventile angeordnet, sondern aktiv steuerbare Ventile. Für das dargestellte Ausführungsbeispiel handelt es sich um 2/2-Ventile, die vorzugsweise ohne Ansteuerung ihre Sperrstellung einnehmen. Hier sind die 2/2-Ventile elektropneumatisch vorgesteuert durch Magnetventile 11c, 11d, die von der Steuereinheit 9 angesteuert werden. Diese elektronische Steuerung der Kreisschutzventile 25b, 25d ermöglicht einerseits eine bedarfsgerechte Öffnung und Schließung der Kreisschutzventile 25b, 25d durch die Steuereinheit 9. Für den Fall, dass eine Leckage in einem Betriebsbremskreis 35, 37 festgestellt wird, kann gezielt das zugeordnete Kreisschutzventil 25b, 25d in die Sperrstellung gesteuert werden, womit vermieden ist, dass eine weitere Förderung von Druckluft in den defekten Betriebsbremskreis 35, 37 erfolgt und/oder eine Absenkung des Systemdruck erfolgt. Eine entsprechend veränderte Druckluftaufbereitungseinheit 2 kann auch für die Ausführungsbeispiele gemäß den anderen Fig. eingesetzt werden.

Schließlich ist gemäß Fig. 7 als Backup-Druckluftreservoir 43 der Luftfederungskreis 34 verwendet, wobei in diesem Fall das Leitungsvolumen des Luftfederungskreises 34 und/oder auch das Volumen von Luftfedern die Druckluft für die Backup-Druckluftversorgung bereitstellen kann. Möglich ist aber auch, dass hierzu ein etwaiger Vorratsbehälter des Luftfederungskreises 34 genutzt wird. Zu diesem Zweck zweigt von dem Luftfederungskreis 34 eine Versorgungsleitung 71 ab, die wiederum verzweigt in Versorgungsleitungszweige 72, 73, die jeweils mit einem Eingangsanschluss 45a, 45b verbunden sind.

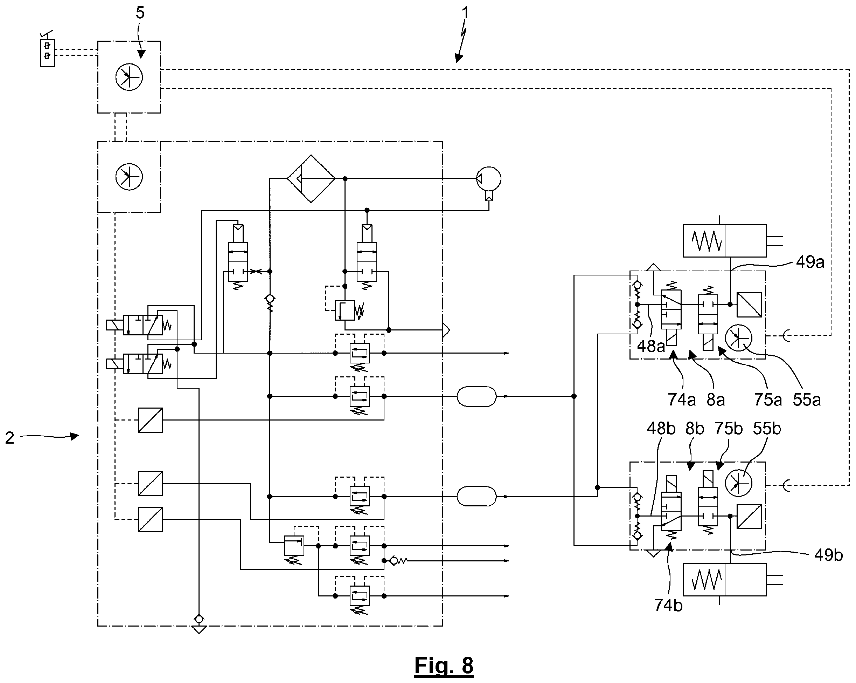

Das in **Fig. 8** dargestellte Ausführungsbeispiel der Bremsanlage 1 entspricht bis auf die Ausgestaltung der Bremssteuermodule 8 dem Ausführungsbeispiel gemäß Fig. 5. In den Bremssteuermodulen 8 ist die Eingangsleitung 48 über Magnetventile 74, 75 mit dem Ausgangsanschluss 49 verbunden. Bei dem Magnetventil 74 handelt es sich um ein 3/2-Wegeventil, insbesondere mit einer ohne Ansteuerung eingenommenen Entlüftungsstellung sowie einer mit einer Ansteuerung eingenommenen Durchlassstellung. Hingegen handelt es sich bei dem Magnetventil 75 um ein 2/2-Wegeventil, welches vorzugsweise ohne Ansteuerung seine Sperrstellung einnimmt, während dieses mit der Ansteuerung seine Durchlassstellung einnimmt. Die Ansteuerung der Magnetventile 74, 75 erfolgt bedarfsgerecht durch die Ansteuerung durch die Steuereinheit 55, welche wiederum vorgegeben sein kann oder abhängig sein kann von den Steuersignalen der Bremssteuereinheit 5. Für das dargestellte Ausführungsbeispiel sind die Magnetventile 74, 75 in dieser genannten Reihenfolge zwischen die Eingangsleitung 48 und den Ausgangsanschluss 49 in Reihenschaltung zwischengeordnet, während auch eine umgekehrte Reihenfolge derselben möglich ist. Bremssteuermodule 8 gemäß Fig. 8 können im Austausch gegen die in diesen Figuren eingesetzten Bremssteuermodule auch Einsatz finden in den Bremsanlagen 1 gemäß den anderen Figuren.

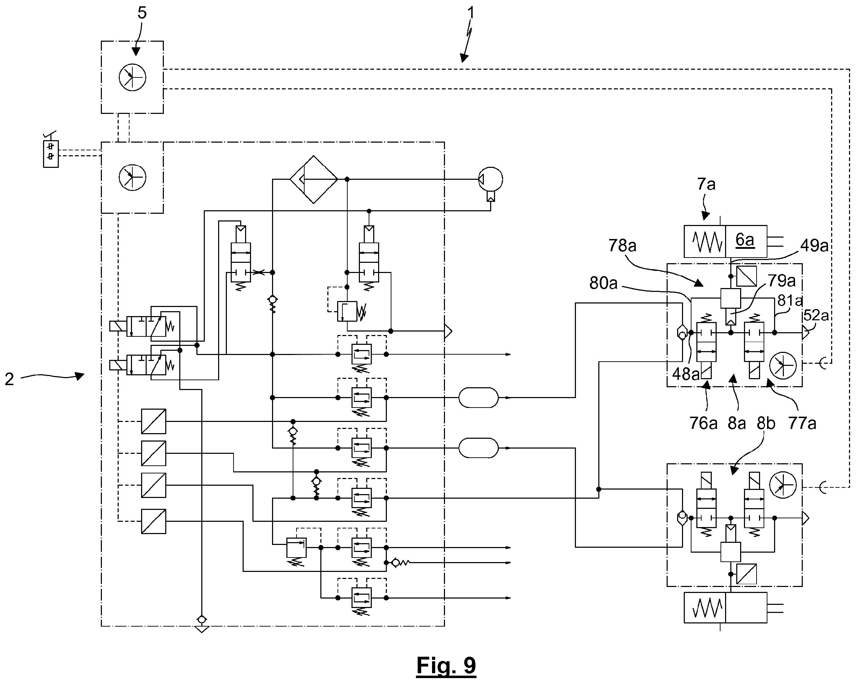

Die Bremsanlage 1 gemäß **Fig. 9** entspricht bis auf die Ausgestaltung der Bremssteuermodule 8 der Bremsanlage 1 gemäß Fig. 6. In den Bremssteuermodulen 8 finden abweichend zu den vorangegangenen Ausführungsbeispielen nicht direkt den Bremsdruck aussteuernde Magnetventile 50, 53 bzw. 74, 75 Einsatz. Vielmehr dienen hier Magnetventile 76, 77 der Vorsteuerung eines Relaisventils 78. Für die hier dargestellte Realisierung sind die Magnetventile 76, 77 jeweils als 2/2-Magnetventile ausgebildet, die vorzugsweise ohne Bestromung ihre Sperrstellung einnehmen. Hierbei ist das Magnetventil 76 zwischen die Eingangsleitung 48 und einen Steueranschluss 79 des Relaisventils 78 zwischengeordnet, während das Magnetventil 77 zwischen dem Steueranschluss 79 und der Entlüftung 52 angeordnet ist. Die Eingangsleitung 48 ist über eine Zweigleitung 80 mit einem Versorgungsanschluss des Relaisventils 78 verbunden. Entsprechend ist ein Entlüftungsanschluss des Relaisventils 78 über eine Zweigleitung 81 mit der Entlüftung 52 verbunden. Das Relaisventil 78 erzeugt somit an dem Ausgangsanschluss 49 einen Bremsdruck entsprechend der Vorsteuerung durch die Magnetventile 76, 77.

Abweichend zu der in Fig. 9 dargestellten Ausführungsform ist alternativ auch möglich, dass eine Vorsteuerung des Relaisventils 78 über in Reihenschaltung angeordnete Magnetventile erfolgt, bei welchen es sich um ein 3/2-Wege-Magnetventil und ein 2/2-Wege-Magnetventil (in beliebiger Reihenfolge) handeln kann. Möglich ist, dass ein derartiges Bremssteuermodul 8 auch Einsatz finden kann in einer Bremsanlage 1 gemäß einer der anderen Figuren.

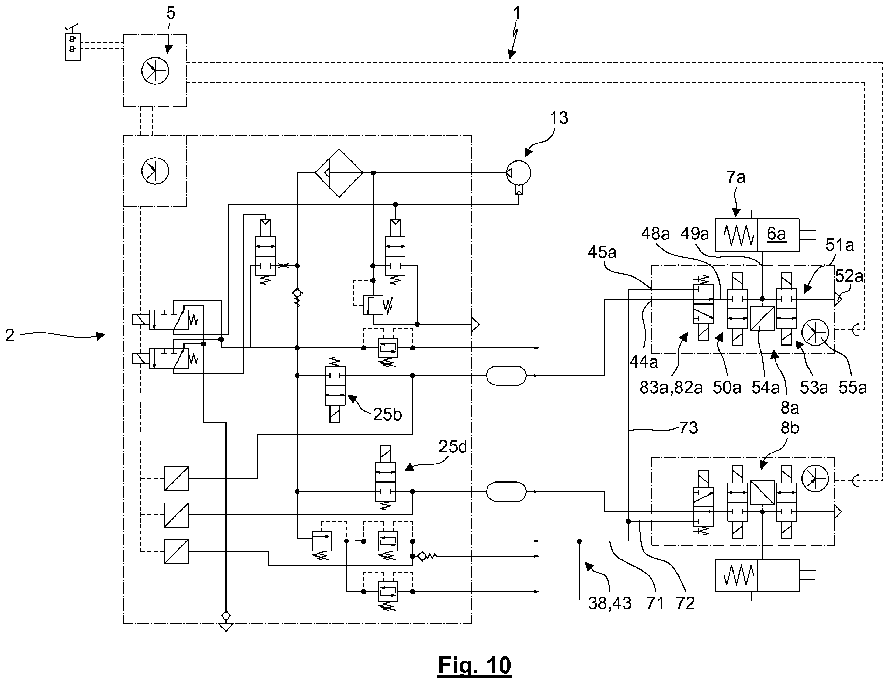

Bis auf die im Folgenden erläuterten Unterschiede entspricht die Bremsanlage 1 gemäß **Fig. 10** der Bremsanlage 1 gemäß Fig. 7:
Gemäß Fig. 10 sind die Kreisschutzventile 25b, 25d nicht vorgesteuert durch Magnetventile 11c, 11d. Vielmehr sind die Kreisschutzventile 25b, 25d als direkt elektrisch gesteuerte Magnetventile ausgebildet.

Des Weiteren dient hier nicht der Luftfederungskreis 34 als Backup-Druckluftreservoir 43. Vielmehr ist hier der Anhängerbremskreis 38 als Backup-Druckluftreservoir 43 verwendet, so dass die Versorgungsleitung 71 und die Versorgungsleitungszweige 72, 73 hier aus dem Anhängerbremskreis 38 für die Backup-Druckluftversorgung mit Druckluft versorgt werden.

Als weiterer optionaler Unterschied sind in Fig. 10 die Bremssteuermodule 8 dahingehend abweichend zu den Bremssteuermodulen 8 gemäß Fig. 7 ausgebildet, dass hier die Rückschlagventile 46, 47 und das Umschaltventil 70 entfallen sind. Stattdessen ist die Eingangsleitung 48 über ein Umschaltventil 82 mit den Eingangsanschlüssen 44, 45 verbunden. Bei dem Umschaltventil 82 handelt es sich vorzugsweise um eine direkt elektrisch gesteuertes Magnetventil, welches insbesondere als 3/2-Wegeventil ausgebildet ist (oder als vorgesteuertes 3/2-Wegeventil ausgebildet ist, welches von einem 3/2-Wege-Magnetventil vorgesteuert ist). Das hier dargestellte 3/2-Wegeventil verbindet in einer ersten Betriebsstellung den Eingangsanschluss 44 mit der Eingangsleitung 48, während der Eingangsanschluss 45 abgesperrt ist. Hingegen verbindet das Umschaltventil 82 in der zweiten Betriebsstellung den Eingangsanschluss 45 mit der Eingangsleitung 48, während der Eingangsanschluss 44 abgesperrt ist. Vorzugsweise nimmt das Umschaltventil 82 ohne elektrische Ansteuerung die erste Betriebsstellung ein.

In den dargestellten Ausführungsbeispielen ist ein Sicherungsventil 83, über welches eine Drucksicherung in dem Bremssteuermodul 8 und des Bremsdrucks in dem Betriebsbremszylinder 6 in einem Backup-Fall, also einer Leckage in einem Betriebsbremskreis 35, 37, erfolgt, als Rückschlagventil 46, 47, Wechselventil 70, Umschaltventil 70, und/oder Umschaltventil 82 ausgebildet.

Für die erfindungsgemäßen Ausgestaltungen sind die Bremssteuermodule 8 jeweils mit zwei Ausgängen 24 der Druckluftaufbereitungseinheit 2 verbunden. Dies erfolgt vorzugsweise über zwei parallele Versorgungsleitungen zwischen den Ausgängen 24 der Druckluftaufbereitungseinheit 2 und dem zugeordneten Bremssteuermodul 8, welche erst in dem Bremssteuermodul 8 oder außerhalb desselben zusammengeführt sein können.

### BEZUGSZEICHENLISTE

- 1: Bremsanlage
- 2: Druckluftaufbereitungseinheit
- 3: Bremssignalgeber
- 4: Bremspedal
- 5: Bremssteuereinheit
- 6: Betriebsbremszylinder
- 7: Kombi-Federspeicherbremszylinder
- 8: Bremssteuermodul
- 9: Steuereinheit
- 10: Drucksensor
- 11: Magnetventil
- 12: Eingangsanschluss
- 13: Kompressor
- 14: Eingangsleitung
- 15: Lufttrockner
- 16: Entlüftung
- 17: Entlüftungszweig
- 18: Sicherheitsventil
- 19: Sperrventil
- 20: Zentralleitung
- 21: Sicherungsventil
- 22: Rückschlagventil
- 23: Kreisleitung
- 24: Ausgang
- 25: Kreisschutzventil
- 26: Bypassleitung
- 27: Regenerationsventil
- 28: Drossel
- 29: Entlüftung
- 30: Steuerleitung
- 31: Steuerleitung
- 32: Druckbegrenzungsventil
- 33: Rückschlagventil
- 34: Luftfederungskreis
- 35: Betriebsbremskreis
- 36: Backupkreis
- 37: Betriebsbremskreis
- 38: Anhängerbremskreis
- 39: Federspeicherbremskreis
- 40: Nebenverbraucherkreis
- 41: Druckluftreservoir
- 42: Druckluftreservoir
- 43: Backup-Druckluftreservoir
- 44: Eingangsanschluss
- 45: Eingangsanschluss
- 46: Rückschlagventil
- 47: Rückschlagventil
- 48: Eingangsleitung
- 49: Ausgangsanschluss
- 50: Magnetventil
- 51: Entlüftungszweig
- 52: Entlüftung
- 53: Magnetventil
- 54: Drucksensor
- 55: Steuereinheit
- 56: Steuerleitung
- 57: Versorgungsleitung
- 58: Versorgungsleitung
- 59: Versorgungsleitungszweig
- 60: Versorgungsleitungszweig
- 61: Versorgungsleitungszweig
- 62: Versorgungsleitungszweig
- 63: Versorgungsleitungszweig
- 64: Versorgungsleitungszweig
- 65: Bremssteuermoduleinheit
- 66: Zweigleitung
- 67: Zweigleitung
- 68: Rückschlagventil
- 69: Rückschlagventil
- 70: Umschaltventil
- 71: Versorgungsleitung
- 72: Versorgungsleitungszweig
- 73: Versorgungsleitungszweig
- 74: Magnetventil
- 75: Magnetventil
- 76: Magnetventil
- 77: Magnetventil
- 78: Relaisventil
- 79: Steueranschluss
- 80: Zweigleitung
- 81: Zweigleitung
- 82: Umschaltventil
- 83: Sicherungsventil

## Patentansprüche

1. Elektropneumatische Bremsanlage (1) für ein Nutzfahrzeug mit
a) einem ersten Bremssteuermodul (8a), mittels dessen eine Erzeugung eines Bremsdruckes für einen Betriebsbremszylinder (6a) eines Fahrzeugrades oder für Betriebsbremszylinder mindestens einer Fahrzeugachse erfolgt,
b) einem zweiten Bremssteuermodul (8b), mittels dessen eine Erzeugung eines Bremsdruckes für einen Betriebsbremszylinder (6b) mindestens eines Fahrzeugrades oder für Betriebsbremszylinder mindestens einer Fahrzeugachse erfolgt,
c) wobei ein Bremssteuermodul (8a) sowohl mit einem Druckluftreservoir (41) als auch mit einem Backup-Druckluftreservoir (43) verbunden ist, **dadurch gekennzeichnet, dass**
d) sowohl das erste Bremssteuermodul (8a) als auch das zweite Bremssteuermodul (8b) zur Druckluftversorgung mit dem oder einem Backup-Druckluftreservoir (43) verbunden ist,
e) wobei das dem ersten Bremssteuermodul (8a) zugeordnete Druckluftreservoir (41) das Backup-Druckluftreservoir (43) für das zweite Bremssteuermodul (8b) bildet und
f) das dem zweiten Bremssteuermodul (8b) zugeordnete Druckluftreservoir (42) das Backup-Druckluftreservoir (43) für das erste Bremssteuermodul (8a) bildet.

2. Bremsanlage (1) nach Anspruch 1, **dadurch gekennzeichnet, dass** die Druckluftversorgung durch das Druckluftreservoir (41, 42) über ein Sicherungsventil (83) erfolgt.

3. Bremsanlage (1) nach einem der vorhergehenden Ansprüche, **dadurch gekennzeichnet, dass** die Bremssteuermodule (8) jeweils einen ersten Eingangsanschluss (44) und einen zweiten Eingangsanschluss (45) aufweisen, wobei
a) der erste Eingangsanschluss (44) und der zweite Eingangsanschluss (45) in eine gemeinsame Eingangsleitung (48) des zugeordneten Bremssteuermoduls (8) münden, vorzugsweise aber gegeneinander abgesperrt sind,
b) die ersten Eingangsanschlüsse (44) jeweils mit einem zugeordneten Druckluftreservoir (41; 42) verbunden sind und
c) die zweiten Eingangsanschlüsse (45) mit dem Backup-Druckluftreservoir (43) verbunden sind.

4. Bremsanlage (1) nach einem der vorhergehenden Ansprüche, **dadurch gekennzeichnet, dass** die Bremsanlage (1) eine Druckluftaufbereitungseinheit (2) aufweist, die
a) einen Druckregler, einen Lufttrockner (15) und mindestens ein Kreisschutzventil (25) aufweist und
b) mindestens ein Druckluftreservoir (41, 42) und/oder das Backup-Druckluftreservoir (43) mit Druckluft versorgt.

5. Bremsanlage (1) nach einem der vorhergehenden Ansprüche, **dadurch gekennzeichnet, dass** in einem Bremssteuermodul (8)
a) eine oder die Eingangsleitung (48) über ein Magnetventil (50) mit einem Ausgangsanschluss (49) für mindestens einen Betriebsbremszylinder (6) verbunden ist und
b) eine Entlüftung (52) oder ein Entlüftungsanschluss über ein Magnetventil (53) mit dem Ausganganschluss (49) verbunden ist.

6. Bremsanlage (1) nach einem der Ansprüche 1 bis 4, **dadurch gekennzeichnet, dass** in einem Bremssteuermodul (8) eine oder die Eingangsleitung (48) über eine Kombination eines 3/2-Wege-Magnetventils (74) und eines 2/2-Wege-Magnetventils (75) mit einem Ausgangsanschluss (49) für mindestens einen Betriebsbremszylinder (6) verbunden ist.

7. Bremsanlage (1) nach einem der Ansprüche 1 bis 4, **dadurch gekennzeichnet, dass** in einem Bremssteuermodul (8) eine oder die Eingangsleitung (48) über ein Relaisventil (78) mit einem Ausgangsanschluss (49) für mindestens einen Betriebsbremszylinder (6) verbunden ist, wobei ein Steueranschluss (79) des Relaisventils (78) über
a) eine Kombination eines 3/2-Wege-Magnetventils und eines 2/2-Wege-Magnetventils oder
b) zwei 2/2-Wege-Magnetventile (76, 77)
be- und entlüftet wird.

8. Bremsanlage (1) nach Anspruch 1, **dadurch gekennzeichnet, dass** das Backup-Druckluftreservoir (43) ein Druckluftreservoir
a) eines Luftfederungskreises (34),
b) eines Anhängerbremskreises (38),
c) eines Parkbremskreises (39) und/oder
d) eines Nebenverbraucherkreises (40)
ist.

9. Verwendung einer Druckluftaufbereitungseinheit (2) für ein Nutzfahrzeug mit
a) einem Druckregler,
b) einem Lufttrockner (15) und
c) Ausgängen (24a, 24b, 24d, 24e, 24f, 24g) für mindestens zwei Betriebsbremskreise (35, 37), für einen Luftfederungskreis (34), einen Anhängerbremskreis (38), einen Federspeicherbremskreis (39) und/oder einen Nebenverbraucherkreis (40) (Kreisschutzventil), **dadurch gekennzeichnet, dass**
d) ein zusätzlicher Ausgang (24c) für einen Backupkreis (36) vorhanden ist,
für eine Bremsanlage nach einem der Ansprüche 1 bis 8.

## Claims

1. Electro-pneumatic brake system (1) for a utility vehicle comprising
a) a first brake control module (8a) by which a brake pressure for a service brake cylinder (6a) of a vehicle wheel or for service brake cylinders of at least one vehicle axle is generated,
b) a second brake control module (8b) by which a brake pressure for a service brake cylinder (6b) of at least one vehicle wheel or for service brake cylinders of at least one vehicle axle is generated,
c) one of the brake control modules (8a) being connected both to a compressed air reservoir (41) as well as to a backup compressed air reservoir (43), **characterized in that**
d) both the first brake control module (8a) as well as the second brake control module (8b) are connected to the or a backup compressed air reservoir (43) for providing a supply of compressed air,
e) wherein the compressed air reservoir (41) associated with the first brake control module (8a) serves as the backup compressed air reservoir (43) for the second brake control module (8b), and
f) the compressed air reservoir (42) associated with the second brake control module (8b) serves as the backup compressed air reservoir (43) for the first brake control module (8a).

2. Brake system (1) of claim 1, **characterized in that** the compressed air supply is provided by the compressed air reservoir (41, 42) via a securing valve (83).

3. Brake system (1) of one of the preceding claims, **characterized in that** the brake control modules (8) each comprise a first inlet port (44) and a second inlet port (45) wherein
a) the first inlet port (44) and the second inlet port (45) open into a common inlet line (48) of the associated brake control module (8), the first and second inlet ports (44, 45) preferably being closed against each other,
b) the first inlet ports (44) each being connected to an associated compressed air reservoir (41; 42) and
c) the second inlet ports (45) being connected to the backup compressed air reservoir (43).

4. Brake system (1) of one of the preceding claims, **characterized in that** the brake system (1) comprises a compressed air processing unit (2)
a) comprising a pressure controller, an air dryer (15) and at least one circuit protection valve (25) and
b) supplies compressed air to at least one compressed air reservoir (41, 42) and/or the backup compressed air reservoir (43).

5. Brake system (1) of one of the preceding claims, **characterized in that** in one brake control module (8)
a) a or the inlet line (48) is connected via a solenoid valve (50) to an outlet port (49) for at least one service brake cylinder (6) and
b) a de-aeration (52) or a de-aerating port is connected via solenoid valve (53) to the outlet port (49).

6. Brake system (1) of one of claims 1 to 4, **characterized in that** in one brake control module (8) a or the inlet line (48) is connected via a combination of a 3/2-way solenoid valve (74) and a 2/2-way solenoid valve (75) to an outlet port (49) for at least one service brake cylinder (6).

7. Brake system (1) of one of claims 1 to 4, **characterized in that** in a brake control module (8) a or the inlet line (48) is connected via a relay valve (78) to an outlet port (49) for at least one service brake cylinder (6), a control port (79) of the relay valve (78) being aerated and de-aerated via
a) a combination of a 3/2-way solenoid valve and a 2/2-way solenoid valve or
b) two 2/2-way solenoid valves (76, 77).

8. Brake system (1) of claim 1, **characterized in that** the backup compressed air reservoir (43) is a compressed air reservoir
a) of an air spring circuit (34),
b) of a trailer brake circuit (38),
c) of a parking brake circuit (39) and/or
d) an auxiliary consumer circuit (40).

9. Use of a compressed air processing unit (2) for a commercial vehicle, having
a) a pressure regulator,
b) an air dryer (15), and
c) outlets (24a, 24b, 24d, 24e, 24f, 24g) for at least two service brake circuits (35, 37), an air spring circuit (34), a trailer brake circuit (38), a spring-loaded brake circuit (39), and/or an auxiliary consumer circuit (40) (circuit protection valve), **characterized in that**
d) an additional outlet (24c) for a backup circuit (36) is provided,
for a braking system of one of claims 1 to 8.

## Revendications

1. Installation de freinage électropneumatique (1) pour un véhicule utilitaire avec
a) un premier module de contrôle de freinage (8a) au moyen duquel une pression de freinage est générée pour un vérin de freinage de service (6a) d'une roue de véhicule ou pour des vérins de freinage de service d'au moins un essieu de véhicule,
b) un deuxième module de contrôle de freinage (8b) au moyen duquel une pression de freinage est générée pour un vérin de freinage de service (6b) d'au moins une roue de véhicule ou pour des vérins de freinage de service d'au moins un essieu de véhicule,
c) dans laquelle un module de contrôle de freinage (8a) est relié avec un réservoir d'air comprimé (41) ainsi qu'avec un réservoir d'air comprimé de secours (43),
**caractérisée en ce que**
d) le premier module de contrôle de freinage (8a) ainsi que le deuxième module de contrôle de freinage (8b) sont reliés, pour l'alimentation en air comprimé, avec le ou un réservoir d'air comprimé de secours (43),
e) dans laquelle le réservoir d'air comprimé (41) associé au premier module de contrôle de freinage (8a) forme le réservoir d'air comprimé de secours (43) pour le deuxième module de contrôle de freinage (8b) et
f) le réservoir d'air comprimé (42) associé au deuxième module de contrôle de freinage (8b) forme le réservoir d'air comprimé de secours (43) pour le premier module de contrôle de freinage (8a).

2. Installation de freinage (1) selon la revendication 1, **caractérisé en ce que** l'alimentation en air comprimé par le réservoir d'air comprimé (41, 42) a lieu par l'intermédiaire d'une vanne de sécurité (83).

3. Installation de freinage (1) selon l'une des revendications précédentes, **caractérisé en ce que** les modules de contrôle de freinage (8) comprennent chacun un premier raccord d'entrée (44) et un deuxième raccord d'entrée (45), dans laquelle
a) le premier raccord d'entrée (44) et le deuxième raccord d'entrée (45) débouchent dans une conduite d'entrée commune (48) du module de contrôle de freinage (8) correspondant, mais sont de préférence isolés l'un de l'autre,
b) les premiers raccords d'entrée (44) sont reliés respectivement avec un réservoir d'air comprimé (41 ; 42) correspondant et
c) les deuxièmes raccords d'entrée (45) sont reliés avec le réservoir d'air comprimé de secours (43).

4. Installation de freinage (1) selon l'une des revendications précédentes, **caractérisée en ce que** l'installation de freinage (1) comprend une unité de mise à disposition de l'air (2) qui
a) comprend un régulateur de pression, un dessiccateur d'air (15) et au moins une vanne de protection du circuit (25) et
b) alimente au moins un réservoir d'air comprimé (41, 42) et/ou le réservoir d'air comprimé de secours (43) en air comprimé.

5. Installation de freinage (1) selon l'une des revendications précédentes, **caractérisée en ce que**, dans un module de contrôle de freinage (8)
a) une ou la conduite d'entrée (48) est reliée, par l'intermédiaire d'une électrovanne (50), avec un raccord de sortie (49) pour au moins un vérin de freinage de service (6) et
b) une ventilation (52) ou un raccord de ventilation est relié par l'intermédiaire d'une électrovanne (53) avec le raccord de sortie (49).

6. Installation de freinage (1) selon l'une des revendications 1 à 4, **caractérisée en ce que**, dans un module de contrôle de freinage (8), une ou la conduite d'entrée (48) est reliée, par l'intermédiaire d'une combinaison d'une électrovanne 3/2 voies (74) et d'une électrovanne 2/2 voies (75), avec un raccord de sortie (49) pour au moins un vérin de freinage de service (6).

7. Installation de freinage (1) selon l'une des revendications 1 à 4, **caractérisée en ce que**, dans un module de contrôle de freinage (8), une ou la conduite d'entrée (48) est reliée, par l'intermédiaire d'une vanne à relais (78) avec un raccord de sortie (49) pour au moins un vérin de freinage de service (6), dans laquelle un raccord de contrôle (79 de la vanne à relais (78) est aéré et ventilé par l'intermédiaire
a) d'une combinaison d'une électrovanne 3/2 voies et d'une électrovanne 2/2 voies ou
b) de deux électrovannes 2/2 voies (76, 77).

8. Installation de freinage (1) selon la revendication 1, **caractérisée en ce que** le réservoir d'air comprimé de secours (43) est un réservoir d'air comprimé
a) d'un circuit de suspension pneumatique (34),
b) d'un circuit de freinage de remorque (38),
c) d'un circuit de freinage de stationnement (39) et/ou
d) d'un circuit de consommateur secondaire (40).

9. Utilisation d'une unité de mise à disposition d'air comprimé (2) pour un véhicule utilitaire avec
a) un régulateur de pression,
b) un dessiccateur d'air (15) et
c) des sorties (24a, 24b, 24d, 24e, 24f, 24g) pour au moins deux circuits de freinage de service (35, 37), pour un circuit de suspension pneumatique (34), un circuit de freinage de remorque (38), un circuit de freinage à ressort (39) et/ou un circuit de consommateur secondaire (40) (vanne de protection de circuit),
**caractérisée en ce que**
d) une sortie supplémentaire (24c) est prévue pour un circuit de secours (36),
pour une installation de freinage selon l'une des revendications 1 à 8.
